(19) Europäisches Patentamt
European Patent Office
Office européen des brevets

(11) EP 2 371 909 A1

(12) # EUROPEAN PATENT APPLICATION

(43) Date of publication:
**05.10.2011 Bulletin 2011/40**

(51) Int Cl.:
***C09D 5/08*** *(2006.01)* ***C09D 191/06*** *(2006.01)*

(21) Application number: **10158716.0**

(22) Date of filing: **31.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicants:
- **Nissan Motor Co., Ltd.**
  **Kanagawa 221-0023 (JP)**
- **Ormecon GmbH**
  **22949 Ammersbek (DE)**

(72) Inventors:
- **Soichiro, Sugawara**
  **243-0123 Kanagawa (JP)**
- **Hideaki Yagashi**
  **243-0123 Kanagawa (JP)**
- **Yasuhiro Kimura**
  **243-0123 Kanagawa (JP)**
- **Shinji, Matsuda**
  **243-0123 Kanagawa (JP)**
- **Schwarzenberg Monika, Dr.**
  **47809 Krefeld (DE)**
- **Wessling Bernhard, Dr.**
  **22941 Bargteheide (DE)**
- **Posdorfer Jörg, Dr.**
  **24576 Bad Bramstedt (DE)**
- **Nissen Stephan**
  **23843 Bad Oldesloe (DE)**

(74) Representative: **UEXKÜLL & STOLBERG**
**Patentanwälte**
**Beselerstrasse 4**
**22607 Hamburg (DE)**

(54) **Corrosion-protective wax composition containing polyaniline in a doped form and a liquid paraffin**

(57) The present invention relates to a corrosion-protective composition containing a wax, an unsubstituted or substituted polyaniline in a doped form and a liquid paraffin, and articles comprising the composition applied on a substrate. It also relates to a process for manufacturing the composition, wherein i) a first dispersion of a polyaniline in a doped form is prepared; and ii) the first dispersion of the polyaniline is combined with a wax component to sufficiently disperse the polyaniline therein, and to the use of the composition as a single layer coating for the protection against corrosion of a substrate in need thereof.

EP 2 371 909 A1

## Description

The present invention relates to a composition for use as a single layer corrosion-protective coating, said composition containing a wax, a polyaniline in a doped form and a liquid paraffin, and methods for manufacturing the same. Furthermore, the present invention relates to the use of the coating in a variety of applications, in particular as a coating for cavities in the automotive industry.

## Background of the invention

The protection against corrosion of metals such as steel is a field of great technological and commercial importance in many industries, e.g. in the automotive, aircraft, construction and marine industries. There are many established techniques which provide a more or less satisfactory corrosion protection performance, e.g. protective coatings by (mostly multi-layer) paint coatings, (electro- or in other way deposited) metal layers and the like. Another approach to provide protection against corrosion has been the so-called passivation of metals, in particular of aluminum. Aluminum is passivated, albeit to an insufficient extent, by reaction with atmospheric oxygen. On an industrial scale, electrolytic oxidation is used for passivation (Eloxal process).

Electrolytic passivation of iron and steel has been hitherto practically impossible or only realizable to an insufficient extent. Steel, such as stainless steel, is chemically passive in an acidic medium due to the presence of, *inter alia,* chromium oxides, but very susceptible to pitting since there is no dense homogenous passive outer layer. Temporarily passivation has been achieved by the use of strong acids against acidic attack. However, the passivating layer is very easily damaged and not stable.

Another more recent approach to protect metals such as steel against corrosion which is based on the above-discussed principle of passivating the metal is described in US 5,721,056. This patent describes a process for the production of a corrosion-protected metallic material by passivation.

More specifically, in the process of US 5,721,056 (JP 2536817), a layer of an intrinsically conductive polymer such as polyaniline is non-eletrolytically deposited on the metallic material and the coated metallic material is contacted with oxygen-containing water until the equilibrium potential is reached, thereby forming the corrosion-protecting structure. The process of US 5,721,056 (JP 2536817) includes the possibility that the layer of the conductive polymer is removed and the metallic material is further coated with another corrosion-protective composition which is usually called barrier layer or top coat. Example 7 of this patent mentions the use of a conventional PVC corrosion paint (vinyl chloride-vinyl acetate copolymer paint available from the company Hagebau, Germany).

US 5,648,416 relates to an anti-corrosion paint comprising one or more polymeric binders dispersed in a liquid medium comprising a non-conductive conjugated polymer such as polyaniline. More specifically, the "conductivity" of the conjugated polymer is specified to be below $10^{-8}$ $ohm^{-1}$ $cm^{-1}$.

WO 90/04256 (US 5,498,761; JP 2519551)is directed to a process for producting thin layers of conductive polymers on a broad variety of substrates such as metals, semiconductors, plastics, natural products, glasses, pigments or synthetic and natural fillers for use in the rubber or plastics industry. The layers are prepared by using dispersions of the conductive polymer such as polyaniline in a broad variety of materials including organic solvents or thermoplastic polymers.

US 4,935,164 (JP 6068029) relates to blends of conductive polymers such as polyaniline with thermoplastic matrix polymers characterized by a certain solubility parameter to prepare moldable polymer compositions. These are used for producing molded articles, in particular for electrical conductors, semiconductors or photoconductors. As thermoplastic matrix polymers, a broad variety of materials including polyethers, polyesters, polyvinylidene chloride or fluoride, polyamide, polycaprolactone, polyurethane, cellulose etc. are mentioned.

WO 89/02155 (US 5,567,355; JP 8019336) relates to an intrinsically conductive polymer in the form of dispersible solids of a size characterized by an average diameter of less than 500 nm (primary particles). A primary particle is understood in the art to be the smallest morphological unit, i.e. super-molecular structural unit, that can be recognized in a scanning or transmission electrone microscope, as discussed in WO 89/02155.

The solid forms of the conductive polymers of WO 89/02155 can be dispersed in a variety of media including, *inter alia,* polymers which are not electrically conductive such as thermoplastic polymers characterized by a certain solubility parameter or non-thermoplastic polymers such as duroplastic resinous substances, lacquers, latexes, liquid crystal polymers etc. In one of the examples of this patent application, the use of polyaniline in the form of primary particles in a medium containing a lacquer on the basis of chlorinated rubber or VC-copolymer is mentioned, which lacquer may be used for corrosion protection (see Examples 17 and 18 of WO 89/02155).

WO 89/01694 (US 5,069,820; JP 2644083) relates to thermally stable forms of conductive polyaniline and articles formed from such compositions. The polyaniline of WO 89/01694 may be combined with one or more thermoplastic polymers and various other optional components as described on pages 14 to 18 of this patent application.

WO 90/10297 (US 5,160,457; JP 2670329) also relates to thermally stable forms of conductive polyanilines

and conductive articles formed from such compositions. The compositions are said to be useful for a broad variety of purposes such as EMI shielding of sensitive electronic equipment, antistatic materials or corrosion protection of corrodible materials such as steel.

JP-A-2008121052 is directed to a composition suitable for preventing rust, which composition is composed of a compound comprising nitrogen and an unsaturated carbon bond and polyaniline. For clarification, acryloylmorpholine is a nitrogen-containing material. The composition can be hardened/cured by exposure to irradiation such as UV rays or electron beams for practical use in order to fix the film.

WO 2009/040626 relates to a metallic material coated with a film containing polyaniline in an insulating, highly oxidized state (PE state). The use of an insulating polyaniline system containing no dopants to achieve corrosion inhibition is presented as an essential feature of the invention. The use of polyaniline in a conductive, i.e. doped form is said to be disadvantageous due to corrosion which is caused by the presence of the dopant in the polyaniline system.

Furthermore, waxes are used in various formulations, especially in the automotive industry to prevent corrosion in cavities, which other corrosion protection methods or materials can not reach and/or which can not be protected to a sufficient degree due to severe corrosion conditions. Such waxes usually provide a satisfactory protection against rust, especially when and insofar as a pretreatment based on zinc phosphate formulations and electro-deposition (ED) coats are effectively used. However, especially in cavities, the deposition of the Zn phosphate or ED coats is insufficient. Moreover, the wax film itself is deteriorated during long-term practical use, i.e. formation of cracks, loss of film thickness, denaturing due to contact with water, temperature cycle driven deterioration, absorption of wax component(s) by mud accumulating on the wax layer etc. In such cases, rusting occurs and spreads from such defective points of the wax coating. Moreover, the wax formulations used so far are solvent-containing which causes environmental concerns. However, non-solvent based waxes (or wax formulations meeting volatile organic compounds - VOC - limitation requirements) exhibit a significantly poorer corrosion protection performance.

As illustrated by the patent and scientific literature as discussed above, the prior art approaches to corrosion protection of metallic materials such as steel are associated with a number of limitations and disadvantages.

For example, in the passivation technology, separate layers are preferably used for providing the passivation effect and for providing a diffusion barrier (for corrosive materials and corrosion products). More specifically, a first layer, called primer, would be used for the active passivation task while a further layer, called top coat, would be used as a diffusion barrier. Accordingly, in industrial applications, multi-layer coatings are used. This is associated with multi-step coating processes.

Furthermore, apparently depending on the specific characteristics of the coating composition, in some compositions the use of non-conductive polyaniline, i.e. the neutral emeraldine base, is preferred.

Furthermore, for certain applications such as the formation of anti-corrosive coatings in hollow spaces, e.g. in automobiles ("cavity wax"), the use of multi-layer coatings or exposure to liner irradiation such as UV rays or electron beams is not possible because the cavities are formed first, then filled with the wax which prevents the application of another finish layer on top of the wax, applied at hollow cavities especially. However, at present there is no single layer coating available that would in particular meet the practical requirements with regard to long-term stability and reliability, especially for use in the automotive industry.

It is therefore an object of the present invention to provide a composition for use as a corrosion-protective coating which can be easily manufactured and whose properties are such that it can also be used in applications where the coating technology is limited, such as the coating of cavities/hollow spaces. Furthermore, the coating should show superior corrosion protection of the material to be protected, e.g. steel, as compared to the coating (wax) without polyaniline. Furthermore, the coating should not show the disadvantages associated with the prior art teachings discussed above, and so it should signicantly improve those wax formulations which meet general national and international VOC limitation regulations.

## Summary of the invention

According to a first aspect, the present invention relates to a corrosion-protective composition containing a wax, an unsubstituted or substituted polyaniline in a doped form and a liquid paraffin.

According to a second aspect, the present invention relates to an article comprising a substrate to be protected against corrosion and a single layer coating comprising the composition according to the first aspect.

According to a third aspect, the present invention relates to a process for manufacturing a composition according to the first aspect, wherein

i) a first dispersion of a polyaniline in a doped form is prepared;

ii) the first dispersion of the polyaniline is combined with a wax component to sufficiently disperse the polyaniline therein.

According to a fourth aspect, the present invention relates to a process for manufacturing an article according to the second aspect, wherein the composition is prepared as defined for the third aspect.

According to a fifth aspect, the present invention relates to the use of a composition as defined for the first aspect as a single layer coating for the protection against corrosion of a substrate in need thereof.

Further preferred aspects of the invention are described hereinbelow and in the dependent claims.

## Detailed description of the invention

As used herein, the term "wax" means a lipid type of material (or a mixture of different such materials, e.g. differentiated by melting point and/or composition) which in general is characterized by a melting point above 45°C at standard conditions and is solid at room temperature. Unlike thermoplastic polymers, a wax is characterized by a low viscosity above melting point. The material is hydrophobic and essentially insoluble in water.

More specifically, the wax component of the present invention may be either a single chemical species or a mixture of species. Furthermore, other components than wax, e.g. additives such as fillers, anti-corrosive agents such as sulfonate metal salts, fatty acid derivatives, fatty acids metal salts like Lanolin acid metal salts, unsaturated oils like ricinus or wood oil, and accelerators for hardening reactions involving such unsaturated materials may be added to such an extent that the waxy character of the component is not significantly affected. Further components are described in detail hereinbelow.

The wax component can show a newtonian viscosity or can be thixotropic.

With regard to the liquid paraffin component of the present invention, it is noted that this component is not necessarily present in the corrosion-protective wax composition as a separate liquid phase. Rather the term liquid is used to characterize this group of materials as such, which materials are known in the art. In the corrosion-protective composition of the present invention, the liquid paraffin component may for example be dissolved in or mixed with the solid wax component. Such a composition would also fall under the scope of the present invention.

As used herein "curing by oxygen" means that the material containing a C=C double bond is exposed to an oxygen concentration such that the unsaturation undergoes a chemical reaction. Examples of such reaction are oxidation, epoxide formation or hydroxy formation, or the formation of a bond to other (macro-) molecules containing an unsaturation, thereby resulting in a certain degree of cross-linking.

When reference is made in the claims or description to "a wax", "a polyaniline" or "a liquid paraffin", this includes embodiments where one or more than one of these types of components are used.

### The Polyaniline Component

Any form of a substituted or unsubstituted polyaniline can be conveniently used. Illustrative of useful forms are those described in A.G. Green and A.E. Woodhead, "Aniline-black and allied compounds, Part I", J. Chem. Soc., 101, pp. 1117 (1912) and Kobayashi, et al., "Electrochemical reactions ... of polyaniline film-coated electrodes", J. Electroanal. Chem., 177, pp. 281 - 291 (1984).

More specifically, according to the present invention, the unsubstituted or substituted polyaniline can be derived by polymerization or co-polymerization of a monomer represented by the following general formula:

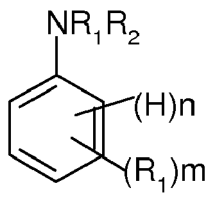

wherein

n is an integer from 0 to 5;

m is an integer from 0 to 5, with the proviso that the sum of n and m is equal to 5;

$R_1$ and $R_2$ are the same or different and are hydrogen, alkyl or a substituent selected from the group as defined for $R_3$ hereinbelow, with the proviso that at least one of $R_1$ or $R_2$ is hydrogen; and

$R_3$ is the same or different at each occurrence and is selected from the group consisting of deuterium, alkyl, alkenyl, aryl, alkoxy, cycloalkyl, cycloalkenyl, alkanoyl, alkylthio, aryloxy, alkylthioalkyl, alkylaryl, arylalkyl, amino, alkylamino, dialkylamino, arylamino, diarylamino, alkylarylamin, alkylsulfinyl, aryloxyalkyl, alkylsulfinylalkyl, alkoxyalkyl, alkylsulfonyl, arylthio; boric acid or salts or esters thereof, phosphoric acid or salts or esters thereof, sulfinate salts, arylsulfinyl,

alkoxycarbonyl, arylsulfonyl, carboxylic acid or salts or esters thereof, phosphonic acid or salts or esters thereof, halo, hydroxy, cyano, sulfinic acid or salts or esters thereof, phosphinic acid or salts or esters thereof, sulfonic acid or salts or esters thereof, nitro, alkylsilane; or any of the foregoing aryl, aliphatic or cycloaliphatic groups substituted with one or more phosphonic acid or salts or esters thereof, sulfonic acid or salts or esters thereof, phosphoric acid or salts or esters thereof, boric acid or salts or esters thereof, sulfinic acid or salts or esters thereof, phosphinic acid or salts or esters thereof, carboxylic acid or salts or esters thereof, halo, nitro, amino, alkylamino, dialkylamino, arylamino, diarylamino, alkylarylamino, cyano or epoxy moieties; or any two $R_3$ groups together or any $R_3$ group together with any $R_1$ or $R_2$ group may form a substituted or unsubstituted alkylene, alkenylene or alkynylene chain completing a 3, 4, 5, 6, 7, 8, 9 or 10 membered aromatic, heteroaromatic, heteroalicyclic or alicyclic ring, which ring may optionally include one or more divalent nitrogen, sulfur, sulfinyl, or salts or esters thereof, carbonyl, sulfonyl, or oxygen atoms wherein permissible substituents are one or more phosphonic acid or salts or esters thereof, sulfonic acid or salts or esters thereof, phosphoric acid or salts or esters thereof, boric acid or salts or esters thereof, phosphinic acid or salts or esters thereof, carboxylic acid or salts or esters thereof, halo, nitro, amino, alkylamino, sulfinic acid or salts or esters thereof, dialkylamino, arylamino, diarylamino, alkylarylamino, cyano or epoxy moieties; or $R_1$ is an aliphatic moiety having repeat units of the formula:

$$-(OCH_2CH_2)_qO\text{-}CH_3,\ -(OCH_2CH(CH_3))_qO\text{-}CH_3,\ -(CH_2)_qCF_3,\ -(CF_2)_q\text{-}CF_3 \text{ or } -(CH_2)_qCH_3$$

wherein q is a positive whole number.

The homopolymer or copolymer derived from the polymerization or copolymerization of aniline or substituted aniline as defined above in general includes at least 10 or more repeating units derived from the above monomers in the polymer backbone.

Preferably, unsubstituted aniline is used to prepare the polyaniline component of the present invention.

As discussed by Green and Woodhead in the above-mentioned publication, a number of well-defined oxidation states are known for polyaniline. The different states range from the fully-reduced so-called leucoemeraldine via protoemeraldine, emeraldine and nigraniline to the fully oxidized pernigraniline. Unlike most other polyconjugated systems, the fully oxidized state in polyaniline is not conducting. Polyaniline only becomes conducting when the moderately oxidized states, in particular the emeraldine-based, are protonated thereby generating charge carriers ("protonic acid doping"). No electrons have to be added or removed from the insulating material to make it conducting. See also the discussion by Kiebooms et al., "Synthesis, Electrical, and Optical Properties of Conjugated Polymers", pp 32 - 33, in the Handbook of Advanced Electronic and Photonic Materials and Devices, Vol. 8, Conducting Polymers, edited by H.S. Nalva, Academic Press, San Diego, USA, 2001.

Suitable dopants for use in the present invention are selected from the group consisting of inorganic or organic acids such as hydrochloric acid, nitric acid, sulfuric acid, acetic acid or phosphoric acid and more particularly organic aliphatic or aromatic sulfonic acids. Other examples are CSA/m-cresol, DBSA, MSA, phosphotungstic acid, CSA/DBSA, phosphoric acid, HCl, diphenyl phosphate, TSA/DSA/DBSA, tetracyanoethylene (TCNE), zinc nitrate, p-toluenesulfonic acid (PTSA), polystyrene sulfonic acid. Further examples include naphthalene sulfonic acids such as dinonyl naphthalene sulfonic acid and dinonyl naphtalene disulfonic acid. Preferred dopants are p-toluene sulfonic acid, dodecylbenzenesulfonic acid (DBSA) and comparable sulfonic acids.

Thereby, conductivities in the range of from $10^{-7}$ S/cm to over $10^2$ S/cm are achieved. A preferred range is from $10^{-1}$ S/cm to $10^2$ S/cm.

The molar concentration of the dopant in the polyaniline may be in the range from 20 to 200%, preferably 60 to 150%, relative to the number of moles of the aniline monomer units.

The conductive polyanilines of the present invention may display a more or less strong rise in conductivity with increasing temperature, as is the case for non-metallic conductors.

The conductive polyanilines of the present invention may also display a metallic behaviour at least in a temperature range close to room temperature down to a few Kelvin in that their conductivity increases with decreasing temperature. In this context, it is noted that a further method of recognising metallic behaviour consists in the plotting of the so-called "reduced activation energy" of the conductivity against the temperature at low temperatures (down to near 0 K). Conductors with a metallic contribution to the conductivity display a positive gradient of the curve at low temperature. Such substances are described as "organic metals". Organic metals are known in the art. According to Wessling et al., Eur. Phys. J. E 2, 2000, 207-210, the transition from the state of a non-metallic to an at least partially metallic conductor can be effected by a single- or multi-step frictional or dispersion procedure after completion of the synthesis of the intrinsically conductive polymer, the process technology basis whereof is described in EP 0 700 573 (JP 3583427). In this way, through the dispersion procedure the conductivity is also increased, without the chemical composition of the conductive polymer used being significantly altered.

In one embodiment of the present invention, the polyaniline component is present in the composition in the form of dispersed particles having a mean size (number mean diameter) in the range from 100 to 600 nanometers, as determined by a Laser Doppler method, as discussed in Example 6 hereinbelow.

In another embodiment of the present invention, the composition contains at least two different types of polyaniline, wherein at least one is in a doped form.

The substituted or unsubstituted polyaniline is present in the corrosion-protective composition in a concentration in the range of 0.05% to 5%, preferably 0.2% to 2%, relative to the total weight of the composition.

The Liquid Paraffin Component

It is an essential feature of the present invention that the polyaniline containing corrosion-protective wax composition contains a liquid paraffin. A liquid paraffin is generally a very highly refined mineral white oil containing paraffins, i.e. saturated hydrocarbons (alkanes) which may in general be described by the general formula $C_nH_{2n+2}$. In the liquid paraffins, n usually is ≤ 20. Thus, it is present in the form of a liquid at standard conditions (room temperature and normal pressure). The liquid paraffin component of the present invention may include linear alkanes (*normal* alkanes) and/or branched alkanes (*iso*alkanes), the latter also being called isoparaffins.

According to one embodiment of the present invention, the wax composition may include the liquid paraffin in an amount of from 5 to 95, preferably 10 to 90 or 20 to 80, or more preferably 30 to 70 or even more preferably 40 to 60 such as 50 to 60 % by weight, relative to the weight of the total composition.

The Wax Component

The corrosion-protective composition of the present invention may include as a wax component a paraffin wax, i.e. a wax material based on paraffins, i.e. alkane hydrocarbons of the general formula $C_nH_{2n+2}$ with n usually being in the range of $20 \leq n \leq 40$. The alkanes may predominantly be linear (paraffin wax). Alternatively, the alkanes of the wax component may contain a higher percentage of isoparaffins, i.e. branched hydrocarbons and naphtenic hydrocarbons such as in microcrystalline wax.

Also, other wax components derived from synthetic or natural sources may be used. Examples for waxes are those based on vegetable, animal or mineral sources. Also, synthetic waxes such as polyalkylene or polyethylene glycol waxes can be used.

Further components which may be present in the composition of the present invention are selected from the group consisting of acids such as fatty acids or sulfonic acids, tall-oil, polymers with isophthalic acids, pentaerythritol and tall-oil, petroleum, overbased calcium salts, vegetable oils. Furthermore, additives such as fillers, anti-corrosive agents such as sulfonate metal salts, fatty acid derivatives, fatty acids metal salts like Lanolin acid metal salts, unsaturated oils like ricinus or wood oil, and accelerators for hardening reactions involving such unsaturated materials may be added to such an extent that the waxy character of the component and/or the total composition is not significantly affected.

In one embodiment, the wax component is nitrogen-free and contains a material characterized by the presence of carbon-carbon double bonds which can be cured by exposure to oxygen. The material characterized by the presence of carbon-carbon double bonds may be present in the composition in a concentration in the range from 70 to 200 based on iodine value. Furthermore, the material may be selected from the group consisting of oils of vegetable origin.

The viscosity of the wax component may be in the range of 100 to 1,000 mPas, determined at 20 °C according to DIN 53019-2

The wax component may also be present during the preparation of the final composition as a component already incorporated in the liquid paraffin of the present invention.

For example, the following combinations of components may be used as a wax or liquid paraffin component or a combination thereof, in accordance with the present invention:

According to one embodiment, a composition containing sulfonic acids, petroleum, overbased calcium salts in an amount of 10 to 30% by weight; fatty acids, tall-oil, polymers with isophthalic acid, pentaerythritol and tall-oil in an amount of 10 to 20% by weight; paraffin waxes and hydrocarbon waxes in an amount of less than 10%; base oil, distillates (petroleum), solvent-refined heavy paraffinic materials in an amount of 40 to 60% by weight, each percentage being based on the total weight of the wax component, may be used. This material is available as the commercial product Noxudol 700 from Auson AB, Kungsbacka, Sweden. This material is of waxy appearance and includes a liquid paraffin component.

According to another embodiment, a combination of a microcrystalline wax in an amount of 5 to 10% by weight; white mineral oil, petroleum in an amount of 50 to 60% by weight; vegetable oil in an amount of 5 to 15% by weight and further additives in an amount of 5 to 15% by weight, each percentage being based on the total weight of this material, may be used. This combination of materials is available as the commercial wax product Nox-Rust®712AM from Parker Industries, Inc., Tokyo, Japan.

According to another embodiment, the liquid paraffin component may be formed by white mineral oil (petroleum) characterized by a density of about 0.85 g/$cm^3$ (at 15°C), an initial boiling point of about 320°C/760 mm Hg and a pour point of about - 12.5°C. Based on the characteristics as stated herein it will be clear to the person skilled in the art where

or how this material can be obtained. Hereinafter, it is called Material A.

According to another embodiment of the present invention, the liquid paraffin component may be formed by highly refined base oil resulting from the hydrogenation of mineral oil hydrocarbons available as the commercial product oil 4243 from Pfinder Chemie, Boeblingen, Germany. It is inter alia characterized by a density of about 850 $kg/m^3$ at 15 °C (DIN EN ISO 12185) and a kinematic viscosity of 13 - 16 $mm^2/s$ at 40 °C (DIN 51562).

According to another embodiment of the present invention, the liquid paraffin component may be formed by waxy hydrocarbons characterized by the following composition distribution: about 4% by weight aromatic hydrocarbons, about 33% naphthenic hydrocarbons and about 63% paraffinic hydrocarbons, as determined according to German DIN 51378-U, and further characterized by a kinematic viscosity of about 19 $mm^2/s$ at 40°C, as determined by German DIN 51562T.1, and a density of about 865 $kg/m^3$ at 15°C, determined according to German DIN 51757 Method 4. This composition is available as the commercial product Pioneer 2002 from Klaus Dahleke KG, Hamburg, Germany.

According to another embodiment of the present invention, the liquid paraffin component may be formed by the technical white oil available as the commercial product Pioneer 2005 from Klaus Dahleke KG, Hamburg, Germany. This product is characterized by a density of about 856 $kg/m^3$ at 15°C, determined according to German DIN 51757 and a kinematic viscosity of about 17 $mm^2/s$ at 40°C, determined according to DIN 51562.

More generally, a preferred liquid paraffin component is highly refined mineral white oil containing hydrocarbons as disclosed hereinabove, see in particular the section entitled "The Liquid Paraffin Component", said liquid paraffin component being characterized by a density in the range from 800 to 900 $kg/m^3$, such as about 840 to 860 at 15°C and a kinematic viscosity in the range from 10 to 120 such as 10 to 60 $mm^2/s$ at 40°C, or preferably 15 to 20, 25, 30 or 40 $mm^2/s$ at 40°C, determined according to DIN 51562.

<u>The Substrates to be Coated</u>

The material to be protected against corrosion by coating with the composition of the present invention, i.e. the substrate, in general is any metallic material prone to corrosion. In particular, it is selected from the group consisting of iron, zinc, aluminum and magnesium, steel, and aluminum or magnesium-plated steel.

Other metals and metal alloys that can be coated with the composition according to the present invention include silver, aluminum, iron, nickel, copper, zinc, cobalt, lead, tantalum, titanium, zirconium, niobium, chromium and the like and alloys thereof. The metal to be protected against protection may also comprise non-metal parts and can be provided in virtually any shape or form including thin film structures of metal on non-metal substrates or substrates consisting completely of a metallic material.

The metallic material may have a flat or curved surface. For example, it may have a cylindrical shape and may form a cavity or a hollow space. Before being coated with the composition of the present invention, the substrate material may be subjected to a pre-treatment as desired, such as washing or any kind of other treatment for improving the adhesion of the coating to the substrate.

The composition of the present invention can be applied to general surfaces, cavities, hollow spaces or panel crevices by spray coating with or without the use of compressed or moderate air, flow coating, flood coating, shower coating, brush painting or bell painting. The thickness of the coating obtained thereby should generally be above 30 microns to achieve the desired long-term durability.

<u>Methods of Manufacturing the Compositions of the Invention</u>

The corrosion-protective composition of the present invention can be manufactured in different ways, as described hereinbelow, to achieve a composition in which the polyaniline component is well dispersed in the wax and related components of the composition, e.g. the liquid paraffin component, as described hereinabove.

According to one embodiment of the present invention, the degree of dispersion of the polyaniline component in the composition is characterized by an A/B ratio in the range from 2 to 3, as derived from a UV-Vis-spectrum, measured at room temperature, wherein

parameter A is the absorbance of a sample of the composition, measured in xylene at 450 nm wavelength; and

parameter B is the absorbance of a sample of the composition, measured in xylene at 880 nm wavelength.

The method for determining the above ratio is also discussed in detail in the examples.

According to one embodiment, a dispersion (paste) in an organic dispersion medium such as xylene or a similar material is prepared, in accordance with the teaching of step c) of the method of WO 2005/070972 (US 2007/0267747; JP-A-2007/518859), as in particular illustrated by Example 4 (Step c)) of said reference.

This teaching including the teaching of steps a) and b) (illustrated by Examples 1 to 3) on the precursor materials is incorporated herein by reference. This relatively highly concentrated dispersion (4 % PAni) in a high-viscosity liquid or even paste form can be used as a concentrate which can directly be incorporated into a wax formulation to form the composition of the present invention.

Dispersion media suitable for use in the process of the present invention are in particular solvents which have a surface tension of at least 25 mN/m. They are liquid at room temperature and have in particular dynamic viscosities of < 1,000 mPas and in particular less than 10 mPas, measured in capillary viscosimeters according to DIN 51 562.

Examples of preferred dispersion media according to the invention are aromatic solvents such as alkyl, in particular methyl, halogen and/or hydroxyl substituted benzene-based solvents such as xylene or chlorophenol; or non-aromatic solvents such as dichloroacetic acid, N-methylpyrrolidone, dimethyl sulphoxide, octanol; or alcohols such as benzyl alcohol or higher alcohols, e.g. paraffinic or aromatic $C_9$ - $C_{20}$ alcohols or mixtures of same.

The organic dispersion medium can optionally be removed, e.g. if waxes should be formulated which can meet regulations to limit volatile organic content ("VOC regulations compliant waxes").

In another embodiment, substituted or unsubstituted polyaniline can be incorporated in a predispersed form into a wax formulation to form the composition of the present invention or a component thereof. One preferred approach can be to use a predispersion similar to step b) of the method of WO 2005/070972 (US 2007/0267747; JP-A-2007/518859) which mainly contains the polyaniline powder, a polar material and optionally a thermoplastic polymer. See claims 6, 8 and 9 of WO 2005/070972.

As polar materials, materials having the following properties can be used:

➢ a surface tension of more than 30 dyn/cm,
➢ not electrically conductive (i.e. having an electrical conductivity of less than $10^{-6}$ S/cm),
➢ be liquid or solid,
➢ inert vis-à-vis the conductive polymer used, i.e. no significant chemical reactions are associated with it; above all, oxidative or reductive and also acid-base reactions are not desired.

Examples of such polar materials are

a) solids: barium sulphate; titanium dioxide, in particular ultrafine titanium dioxide with a particle size of less than 300 nm; organic pigments such as Pigment Yellow 18;
b) inert solvents: water, DMF, DMSO, γ-butyrolactone, NMP and other pyrrolidone derivatives, dioxan, THF;
c) tensides: non-ionic tensides like ethoxylates or alkylphenolethoxylates; anionic tensides like carboxylates, sulfonates, or sulfates, also their (alkali) metal salts may be used; cationic tensides like quaternary ammonium tensides, amphoteric tensides containing both carboxylates or sulfonates and quaternary ammonium groups; each of them having an alkyl group as the hydrophobic part of the tenside.

wherein this list is by way of example and in no way limiting.

In a further another embodiment, the product of step c) of the method of WO 2005/070972 (US 2007/0267747; JP-A-2007/518859) can be used to incorporate the polyaniline into a wax formulation to form the composition of the present invention or a component thereof.

As described above, an essential component of the composition of the present invention is a liquid paraffin. The polyaniline, in any form as described above, can be incorporated (by using any of the above mentioned predispersions) into the liquid paraffin in a higher concentration than is intended to be used in the final composition (after optional removal of solvents). Hence such a formulation can be used as a "masterbatch".

The dispersion of the polyaniline or the grinding of it in the presence of a polar substance can generally be performed in commercially available dispersion equipment, like high-speed powder mixers (so-called "fluid mixers"), using ultrasound, in ball or pearl mills, two- or three-roll mills, dissolvers or the like. The dispersion or grinding time may range from between 2 minutes to 60 minutes, depending on which degree of dispersion or grinding is desired. The weight ratio between polyaniline and the polar substance can range from 1:0.5 to 1:10. The optional additional thermoplastic polymer can be added in a range of between 2 and 8%, relative to the total weight of the polyaniline/polar substance mixture.

The degree of dispersion can be determined in the final wax formulation, if necessary by diluting the wax. It can be measured by UV-VIS spectroscopy and/or particle size measurement (Laser Doppler method), usually at room temperature. For UV-VIS spectroscopy, standards can be taken from pure xylene dispersions; the absorption curve as a whole and the absorption value (at certain wavelengths) of the wax formulation can be compared with such standard which gives a semi-quantitative assessment of the dispersion degree. When measuring particle size e.g. by way of Laser Doppler method, usually a mean particle size (mean number, $m_n$) is given and compared. The use of these methods is known to the person skilled in the art.

As a polyaniline raw material (raw powder), any dispersible polyaniline can be used. It is preferred to use a product resulting from the polymerization methods described in WO 89/02155 (US 5,567,355), more preferably the methods described in WO 2005/070972 (US 2007/0267747 A1; JP-A-2007/518859), and most preferably the methods described in WO2006/092292 (US 2008/265215 A1 ; JP-A-2008-531797).

The useful concentration range depends strongly upon the degree of dispersion. The better the dispersion, i.e. the smaller the polyaniline particles being dispersed in the wax or wax component, the lower the polyaniline concentration can be. A preferred concentration range is between 0.1 and 4%, most preferred between 0.5 and 1.5%, relative to the weight of the total composition.

Below 0.5%, the dispersion degree may be hard to control, in particular in a commercial production scale. This can have adverse effects on the reproducibility of the corrosion protection results. As it is highly desired to provide formulations with reproducible results, a concentation range between 0.5 and 1.5% is preferred, relative to the weight of the total composition.

Higher concentrations, especially towards and above 4%, are necessary if the dispersion degree is not 'optimal'. In this concentration regime, the risk of getting inhomogeneous wax dispersions is increasing, and such inhomogeneous waxes may not show sufficient protection against corrosion.

The incorporation of the polyaniline component into the final composition can be achieved by various different ways. In general, the two or more components are contacted and intimately mixed with each other until a sufficiently homogeneous mixture is obtained. One preferred process is to use the complete final formulation (except for the presence of the polyaniline component) and add polyaniline in premixed or predispersed form, as a solvent (liquid dispersion media) paste (using e.g. xylene as the dispersion medium), and optionally evaporate the solvent / dispersion medium. Another preferred procedure is to prepare a predispersion in a liquid paraffin component of the final formulation. This can be done by either using a predispersion in a solvent in paste form (and evaporating the solvent, leading to a polyaniline concentrate in the liquid paraffin), or by using a premix or predispersion in powder or flake form following to the above described grinding process. This list of preferred procedures is not to be understood as limiting the scope of the present invention.

The incorporation of the predispersions in the final formulation can be performed in conventional processing equipment, like dissolvers, pearl-mills or the like.

Corrosion tests have shown that compositions which contain a minimal amount of a well-dispersed polyaniline (e.g. 0.5 or 1%) significantly improve both solvent-born as well as VOC regulations compliant wax formulations. It is well known that VOC compliant wax formulations (without polyaniline) exhibit a much weaker corrosion protection than solvent-born ones (without polyaniline).

It was therefore surprising that polyaniline containing waxes not only showed a much better corrosion protection when comparing solvent-born formulation with and without polyaniline, but also when comparing polyaniline containing VOC compliant waxes with solvent-born waxes without polyaniline: the VOC compliant polyaniline containing wax formulation is significantly better than the solvent-born wax without polyaniline.

All these results are especially suprising as it is well known to experts in the field that corrosion protection with polyaniline containing paints works efficiently only if a polyaniline containing first paint layer ("primer") is covered and protected by at least one second layer ("top coat"). In applications where waxes are used, there is no second layer protective layer (no "top coat"), but the tests as shown herein, which tests simulated for instance the application in cavities, showed that the polyaniline containing VOC compliant wax even had a better corrosion protection on standard steel than a solvent-born wax used on zinc-galvanized steel. This will be illustrated in more detail in the following examples of the present invention.

## Applications

The compositions according to the present invention can be used as cavity wax in the automotive industry for coating door inner, sill inner or other structural steel panels and attachment parts; or for coating the underfloor, fuel tank, suspension area or other parts nearby for providing physical resistance (stone chipping etc.). Furthermore, they can be used as surface wax in the automotive, aerospace, ship building or machinery industry or anywhere in corrosion protection fields where waxes are used today. Specific materials and forms of materials have been described hereinabove and in the appended claims.

## Examples

The results section of the following examples (Examples 6 to 10) also reports the results of other variants of the compositions prepared according to the procedures of Examples 1 to 6. In those other variants the concentration of polyaniline was changed (e.g. to 0.5, 3 or 8 % by weight). Otherwise, the mode of preparation was the same.

### Example 1 (Preparation of compositions of the invention)

A polyaniline dispersion in xylene (in paste form, 4% polyaniline) was added to a fully formulated wax ("Wax 2", a cavity wax formulation available as "Nox-Rust 712AM®", produced by Parker Ind.) using a pearl mill. Thus, to 400

g of Wax 2, a) 100 g b) 200 g c) 400 g of xylene paste were added so to achieve a polyaniline concentration in the wax of 1) 1% b) 2% and c) 4%. The pearl mill was run for 30 min. Before filling the mixture into the pearl mill, it was prepared in a dissolver (1 liter volume "Kreisdissolver" available from the German company Niemann, equipped with chopped disks of 60 mm diameter, at 6,000 rpm for up to 60 min or for up to 90 min at 5,000 rpm).

This new polyaniline containing wax is termed "Wax 5" in the summary of the results shown hereinbelow.

In an analogous way, the xylene-polyaniline paste was added to a solvent-free cavity wax available as "Noxudol 700" from Auson AB, Kungsbacka, Sweden ( termed "Wax 3" herein), resulting in "Wax 6".

In another experiment, xylene was removed from Wax 6, resulting in "Wax 7". In this experiment, SC-C12 (VMA Gretzmann) with a milling chamber volume of 125 ml with $ZrO_2$ pearls (0.4 - 0.7 mm from JYOTI Ceramics), filling 80% of the chamber was used as pearl mill. Rotor speed was 6,000 rpm.

**Example 2.1 (Preparation of Premix Powder)**

100 g polyaniline powder, prepared according to Example 1 of WO 2005/070972 (US 2007/0267747; JP-A-2007/518859), were premixed with 150 g Cristol TRO 80% (a sulfonated Castor oil from "Antioxidants Pvt, Ltd"), 30 g Hydriol ISM (a isostearic monoisopropanolamide from Hydrior AG) in a fluid mixer for 30 sec, the resulting powder dried in fluid bed dryer, the dried powder subjected to 30 min grinding in a ball mill ("Pulverisette" from Fritsch Co., 2 mm ZrO2 ceramic pearls, at 3,000 rpm) at a temperature of 50 °C.

**Example 2.2 (Preparation of Predispersion)**

Alternatively, a predispersion was prepared according to Example 4 of WO 2005/070972 (US 2007/0267747; JP-A-2007/518859), using the same composition as in Example 2.1, but adding 5% of a thermoplastic polymer (poly (methyl methacrylate)) and proceeding as described in Example 2b of WO 2005/070972 (US 2007/0267747; JP-A-2007/518859).

**Example 3.1 (Preparation of Polyaniline concentrate)**

925 g of a liquid paraffin (Pioneer 2002 from Klaus Dahleke KG) and 75 g of a premix powder resulting from Example 2.1 is filled in a dissolver (1 liter volume, available as "Kreisdissolver" from the German company Niemann, equipped with chopped disks 60 mm diameter, at 6,000 rpm for up to 60 min or for up to 90 min at 5,000 rpm). After this, the mixture is put into a pearl mill (type see above) to finish the dispersion under conditions described in example 1.

This results in a polyaniline concentrate ("masterbatch" ("MB 4")), containing 3% polyaniline.

**Example 3.2 (Preparation of Polyaniline concentrate)**

In an analogous procedure, the product resulting from Example 2.2 was introduced into Pioneer 2002.

**Example 3.3 (Preparation of Polyaniline concentrate)**

In a procedure analogous to Example 3.1, a polyaniline / xylene paste as used in Example 1 is mixed with the liquid paraffin termed "Material A" as explained hereinabove. Thus, 400g of this liquid paraffin are mixed with 600 g polyaniline / xylene paste. After the mixture was complete, xylene was removed in a rotary evaporator at 120 °C over night. The result is a soft, gum-like solid "MB 7".

**Example 3.4 (Preparation of Polyaniline concentrate)**

In a procedure analogous to Example 3.1, a polyaniline / xylene paste as used in Example 1 is mixed with the liquid paraffin Pioneer 2002. Thus, 400g liquid paraffin are mixed with 600 g polyaniline / xylene paste. After the mixture was completed, xylene was removed in a rotary evaporator at 120 °C over night. The result is a soft, gum-like solid "MB 8".

**Example 4.1 (Preparation of a composition of the invention)**

MB 4 (from Example 3.1) is introduced into a wax formulation similar to Wax 2 (mentioned in Example 1) but different from Wax 2 insofar as it did not contain a liquid paraffin, in a dissolver (for 10 min at 2,000 rpm) in an amount such that a 1% polyaniline concentration in the final wax results ("Wax 13").

**Example 4.2 (Preparation of a composition of the invention)**

The product resulting from Example 3.2 was introduced in the same formulation as used in Example 4.1 containing no liquid paraffin, resulting in the final wax ("Wax 16").

**Example 4.3 (Preparation of a composition of the invention)**

The product resulting from Example 3.3 was introduced in the same formulation as used in Example 4.1 containing no liquid paraffin, resulting in the final wax ("Wax 17").

**Example 4.4 (Preparation of a composition of the invention)**

The product resulting from Example 3.4 was introduced in the same formulation as used in Example 4.1 containing no liquid paraffin, resulting in the final wax ("Wax 18").

**Example 5 (Preparation of compositions of the invention)**

The powder-like premixes of Example 2.1 are mixed with Wax 3 (also used in Example 1) in a pearl mill under conditions as described in Example 1, resulting in Wax 8 and Wax 9, respectively.

**Example 6**

The following properties were determined for the various products described above, using the following methods:

- Measurement of density (results in g/cm$^3$)

The mass was measured with an analytical balance and the volume of the graduated flask (Fischer Scientific) was calculated from a measurement with water at 20° C as reference.

- Measurement of viscosity (results in mPas)

The dynamic viscosity was measured according to DIN 53019-2 with a Haake VT550 rotational viscosimeter using sensor SV1 with temperated cup MV. Shear viscosity was recorded after 15 min at 800 rpm (711.7 $s^{-1}$) at 20° C.

- Particle size (results in nm)

Particle sizes of polyaniline in liquid paraffin were measured with a Microtrac UPA 150 ultrafine particle analyzer by dynamic light scattering, at a 1.4 dilution in Xylene. The system measured the light that scattered back from the sample, calculating the Doppler shift to determine particle size (number mean diameter).

- UV-Vis spectra (spectra)

UV-Vis spectra were recorded with a spectral photometer Specord S100 from Analytik Jena in 10 mm quartz cuvettes, using dilutions to account for different absorbance (as shown for the various spectra).

- VOC content (results in %)

VOC content was calculated from weight loss at 105° C after 3 hours of storage in an oven (WTB Binder, model VD 53) using an analytical balance (Kern, model ABS).

- Iron Content (results in mg)

A spectral photometric method was used for measurement of iron content in electrolyte used for immersion. An acidic solution of ammonium thiocyanate gives a characteristic blood-red color complex with iron(III) compounds. Ferrous iron was oxidized by concentrated nitric acid before. Absorbance was measured with a spectral photometer (Analytik Jena, model Specord S100) and ferric iron content was calculated from calibration curve.

- Corrosion rate (results in mg Fe / $m^2$*day)

The weight loss technique was used as corrosion monitoring technique. The method involved exposing of specimens for 150 h to 0.5 M NaCl, then removing the specimens for analysis. Standard steel test panels from Q-panel (0.8 x 102 x 152mm; dull matte surface; ISO 3574 type CR1) coated with the final wax were used as specimen. The weight loss taking place over the period of exposure was expressed as corrosion rate. The weight loss was determined before coating and after removal of the final wax by an analytical balance from Kern, Model ABS.

- Salt Spray test

Salt spray tests were carried out in a corrosion testing apparatus by Erichsen, Model 608, according to DIN 50021. Standard steel test panels from Q-panel (0.8 x 102 x 152mm; dull matte surface; ISO 3574 type CR1) coated with the final wax were used as specimen.

**MB 4:**

- viscosity 250 - 310
- density 0.85
- particle size 650 - 1000
- VOC content 5.4

**Wax 5**

- viscosity 50 - 70
- density 0.91 - 0.95

This wax was studied in more detail with different polyaniline concentrations. The results are shown in the following tables and figures:

Table 1 summarizes the results gathered in a linear sweep voltammetry measurement:

| Pani content [w%] | $E_{corr}$[mV] | $i_{corr}$[A] |
|---|---|---|
| no wax | -459 | 11.5 |
| 0 | -476 | 0.0425 |
| 2 | -396 | 0.0029 |
| 4 | -393 | 0.0845 |
| 8 | -429 | 0.3680 |

The results show that the corrosion potential ($E_{corr}$) has a minimum at 2 - 4 %, and that the corrosion current ($i_{corr}$) has a minimum at 2%.
Figure 1 shows the results of linear sweep voltammetry after 150 hours of immersion in 0.5M NaCl.
Figure 2 illustrates the results of analysis of electrolytes after immersion. The data are also shown in the following Table 2.

Table 2:

| Pani[%] | pH | k[mS/cm] | $\Sigma$ Fe [mg] |
|---|---|---|---|
| 0 | 7.39 | 45.6 | 0.0212 |
| 2 | 7.28 | 49.4 | 0.0103 |
| 4 | 7.21 | 45.5 | 0.0388 |
| 8 | 5.44 | 44.0 | 2.1639 |

(continued)

| Pani[%] | pH | k[mS/cm] | Σ Fe [mg] |
|---|---|---|---|
| 0.5 M NaCl | 6.25 | 45.4 | |

Figure 3 shows cleaned steel panels after 150 h of immersion in0.5 M NaCl, the wax was then dissolved in xylene in an ultrasonic bath during 5 to 10 minutes.
Figure 4 shows the results of optical microscopy. It can be seen that the use of 2% polyaniline results in the lowest degree of corrosion.
Figure 5 shows wax coated steel samples after 48 hours of storage at 100% relative humidity (r.h.),; scratches were applied by cleaning the surface with a Q-tip and filled with NaCl.
Figure 6 shows fresh samples; scratches were applied by cleaning the surface with a Q-tip.
Figure 7 shows wax coated steel panels after 120 h of storage in 100% r. h.; scratches were applied by cleaning the surface with a Q-tip
Figure 8 shows samples after 150 hours of storage at 100% r. h.; scratches were applied by cleaning the surface with a Q-tip
Figure 9 shows the change of the corrosion rate with increasing content of polyaniline. The measurement procedure and analysis of data is explained below and the data underlying the graph of Figure 9 including the layer thickness, water uptake and corrosion rate are shown in the following Table 3.

The corrosion rate was determined as follows:

A) Weight change of steel panel

1. Steel panels were cut into pieces (~10 x 10 cm), the surface was sandblasted, degreased with acetone, the weights of the panels were determined on an analytical balance ($m_1$) and the surface area was calculated from geometrical values measured by a vernier caliper (Mitutoyo).
2. The steel panels were coated with cavity wax and the coatings were dried over night at room temperature and weighed ($m_2$).
3. 0.5 M NaCl was filled into cell on surface (see schematic view in Figure 9a). After 150 h the electrolyte was removed, the wax from the steel panels was removed in an ultrasonic bath by xylene and panels were weighed again ($m_3$).

Table 3:

| 1 | 2 | 3 | 4 | 5 | 6 | 7 | 8 | 9 | 10 |
|---|---|---|---|---|---|---|---|---|---|
| Pani [%] | $m_1$ [g] | $m_2$ [g] | Δm [mg] | A [$cm^2$] | ρ [$g/cm^3$] | d [μm] | $m_3$ [g] | Δm [mg] | $v_r$ [$mg/m^2d$] |
| 0 | 64.0526 | 64.4108 | 358.2 | 103.02 | 0.95 | 36.6 | 64.1148 | 62.2 | -31.90 |
| 0 | 64.1055 | 64.6605 | 555.0 | 103.02 | 0.95 | 56.7 | 64.1102 | 4.7 | -2.41 |
| 2 | 64.7618 | 65.4731 | 711.3 | 103.02 | 0.96 | 71.9 | 64.7613 | -0.5 | 0.26 |
| 2 | 64.1850 | 64.8555 | 670.5 | 103.02 | 0.96 | 67.8 | 64.1849 | -0.1 | 0.05 |
| 4 | 64.6867 | 65.0935 | 406.8 | 104.04 | 0.97 | 40.3 | 64.6794 | -7.3 | 3.74 |
| 4 | 64.0734 | 64.4390 | 365.6 | 103.02 | 0.97 | 36.6 | 64.0663 | -7.1 | 3.64 |
| 8 | 64.5665 | 64.8233 | 256.8 | 104.04 | 0.99 | 24.9 | 64.5458 | -20.7 | 10.62 |
| 8 | 64.8940 | 65.1169 | 222.9 | 104.04 | 0.99 | 21.6 | 64.8650 | -29.0 | 14.87 |
| $\rho_{Wax}$ [$g/cm^3$] = 0.95<br>$\rho_{Pani}$ [$g/cm^3$] = 1.43 | | | | | | | | | |

B) The analysis of the data of Table 3 was conducted as follows:

1. With known density ρ (column 6) and area A (column 5) the layer thickness d of the coating was calculated from the mass of the wax (difference $m_2$-$m_1$). The values are given in column 7.

$$d = m / (A \times \rho)$$

2. The corrosion rate $\rho_r$ was calculated from the mass difference of the steel panels before and after immersion in the electrolyte (column 9). The immersion time t was 150 hours = 6.25 days and the immersed area A = 31.2 $cm^2$:

$$v_r = (m_3 - m_1) / A \times t$$

3. The corrosion rate $v_r$ was plotted versus polyaniline content of the final waxes (in weight %) and the best-fit line was calculated by linear regression without first and last value, as shown in Figure 9.

From the graph of Figure 9 it can be concluded that waxes with a polyaniline content of < 2 % would offer lowest corrosion rate and best corrosion protection.

Figure 10 shows the increase of viscosity with increase of Pani content (top graph) and the decrease of layer thickness with increase of polyaniline content (bottom graph).

On the basis of the data as presented above, it follows that the corrosion resistance is 'best' for the wax with 2% polyaniline. In later tests, another optimal concentration was determined to be around 1%, provided that the degree of dispersion is as desired.

**Wax 6**

- viscosity 50 - 70
- density 0.91 - 0.95
- particle size 430 - 500

**Wax 7**

- viscosity > 1,000
- density 0.94
- particle size 240 - 440
- VOC 5.7

**Wax 8**

- viscosity > 1,000
- density 0.94
- particle size 270 - 500
- VOC 3.3

**Wax 9**

- viscosity 690
- density 0.93
- particle size 240 - 440
- VOC 3.2

**Wax 13**

| | |
|---|---|
| Density @ 15 °C g/cm$^3$ | 0,9609 |

(continued)

| | |
|---|---|
| 105 °C, 3 h mass% | 97,07 |
| Viscosity @ 20 °C (measured with Brookfield viscosimeter) mPas*s | 1620 |
| Viscosity @ 20 °C (measured with Ford cup No 4) s | 234 |
| Viscosity @ 20 °C (measured with Brookfield viscosimeter) mPas*s | 900 |
| Viscosity @ 20 °C (measured with Ford cup No 4) s | 160 |
| Flashpoint °C | 194 |
| Drying time h **) | 120 |
| (substrate is lacquer surface) | |
| Precipitation after 48 h | none |
| Storage stability 40 °C, 72 h | Little separation |
| Storage stability 0 °C, 72 h | no separation |
| Penetration | 45mm/h |
| extension on hem | 210 mm/0.5h |
| Rust protection (25 μm) CCT (cyclic corrosion test) non galv. steel | >200 |

**Wax 16**

- viscosity 360 (at 0.5% polyaniline content)
- density 0.89
- particle size 320
- VOC 3.9

**MB 7**

- viscosity > 10,000
- density 0.87
- particle size not determined
- VOC 6.4

**MB 8**

- viscosity > 10,000
- density 0.89
- particle size not determined
- VOC 9.1

**Wax 17**

- viscosity 296 (at 0.5% polyaniline content)
- particle size 504
- VOC 4.5

**Wax 18**

- viscosity 372 (at 1% polyaniline content)
- particle size 442
- VOC 3.7

Figures 11 to 16 show UV-Spectra. The dispersion degree was determined not only by checking the particle size (as discussed above) but also by comparing the UV-absorbance.
Specifically, Figure 11 shows the UV spectrum of a cavity wax without polyaniline.

Figure 12 shows the UV spectrum of Wax 5. A well developed absorption into the near IR can be seen, which indicates metallic properties of the well dispersed polyaniline.

Figure 13 shows the UV spectrum of Wax 8. Localized charge carriers towards the near infrared can be seen, which indicates no or less well expressed metallic properties of the polyaniline. The same applies for Wax 9 shown in Figure 14.

Figures 15 to 18 show the UV spectra of Wax 13, 16, 17 and 18, respectively.

Figure 19 shows a qualitative comparison of the UV spectra of the waxes used to obtain the spectra of Figures 12 to 18.

A quantative analysis of the UV-Vis spectra is described below.

Sample preparation and measurement

The amount of wax containing 0.5 mg of polyaniline is calculated for the polyaniline containing final waxes. A sample of the final wax is weighed in on an analytical balance (Kern, model ABS) and dissolved in 25 ml xylene (Merck, >99.8%). The same amount of the pure final wax without polyaniline is dissolved in 25 ml xylene and taken as base line for the UV-Vis spectral photometer (Jena Analytik, model Specord S 100; operated at room temperature). Afterwards the spectrum for the polyaniline containing final wax is recorded in the wavelength range from 350 nm to 1000 nm. This spectrum therefore reflects the absorption properties of the polyaniline component in the polyaniline containing wax formulation, with a first maximum around 450 nm and a second maximum in the range of 800 nm to the near infra red (NIR) depending on the charge mobility in polyaniline. For polyaniline with a maximum in the NIR, the absorbance is increasing steadily from the minimum to 1000 nm.

For all spectra of the polyaniline containing waxes, the ratio of the absorbance A at 450 nm to the absorbance B at 880 nm is calculated. The ratio of A/B is plotted versus the particle size of polyaniline in liquid paraffin measured by the particle analyzer (Microtrac, model UPA 150).

The specific data underlying the the evaluation described in the above paragraph are shown in the following Table 4.

Table 4:

| I | II | III | IV | V | VI | VII | VIII |
|---|---|---|---|---|---|---|---|
| Wax | Absorbance at 1st Maximum at 450 nm | Absorbance at Minimum at > 450 nm | Absorbance at 2nd Maximum at > 650 nm | Normalized absorbance A at 450-min | Normalized absorbance B at > 650 nm | Ratio A/B | Particle size mn [nm] |
| 5 | 0,691 | 0,288 | 0,310 | 0,4030 | 0,022 | 18,32 | 1014 |
| 17 | 0,741 | 0,328 | 0,363 | 0,4130 | 0,035 | 11,80 | 426 |
| 13 | 0,647 | 0,298 | 0,358 | 0,3490 | 0,060 | 5,82 | 429 |
| 18 | 0,745 | 0,323 | 0,401 | 0,4220 | 0,078 | 5,41 | 392 |
| 16 | 0,440 | 0,118 | 0,231 | 0,3220 | 0,113 | 2,85 | 241 |
| 8 | 0,297 | 0,156 | 0,284 | 0,1410 | 0,128 | 1,10 | 488 |
| 9 | 0,632 | 0,201 | 0,631 | 0,4310 | 0,430 | 1,00 | 488 |

Figure 20 shows a graphic sketch of the data calculated in Table 4. Specifically, Figure 20 presents the change of particle size mn according to Laser Doppler measurement in nanometers (y-axis) with the ratio A/B (x-axis).

**Example 7**

To confirm the polyaniline's contribution to anti-corrosion performance, a test called **Cyclic Corrosion Test-P** was conducted. The results are shown in Table 5. The details of this test procedure are as follows.

Preparation of substrate:

SPC as stated in Table 4 means steel specimens without any plating or surface treatment whose dimensions were 150mm * 70mm. GA45 as used in Table 4 means a zinc-galvanized steel panel whose dimensions were the same as those of the SPC specimens mentioned above. Before applying the wax coating, all specimens were washed and degreased properly, and were masked along the edges. This is schematically shown in in Figure 21a and Figure 21b. The masking of the edges was done to avoid or restrict undefined corrosion along those areas of the specimens which would not depend upon the wax performance. The waxes to be evaluated were applied by means of a bar coater to obtain homogeneous thicknesses of 25 and 50 microns.

Conditions of the Cyclic Corrosion Test-P method (CCT-P):

To simulate the corrosive environment and to accelerate the corrosion process, the following CCT-P conditions were adopted:

(i) Four hours of salt spray at 35 °C
(ii) Two hours of drying at 60 °C and a relative humidity below 30%RH
(iii) Two hours of humidity at 50 °C and a relative humidity of 95%RH.

Thus, the total duration of one cycle is eight hours. A solution of 0.5% sodium chloride was used as the salt spray.

Corrosion evaluation method:

The number of CCT-P cycles after which red rust could be observed on a specimen was determined and is stated in Table 4 for each of the specimens. The higher the number of cycles, the better is the anti-corrosion performance. The polyaniline effect for anti-corrosion performance is illustrated by the ratios stated in the column entitled "PAni effect, vs. w/o(without) PAni" of Table 4. Since the anti-corrosion performance of the individual wax also depends upon the wax in which the polyaniline component is dispersed, the polyaniline effects are shown by way of comparison to the same type of wax formulation without the polyaniline component.

The results shown in Table 4 confirm the improvement obtained by using polyaniline in an anti-corrosion wax. The performance, as determined by the CCT-P test is at least 1.18 times better than the performance of the same type of wax without polyaniline. Especially, for non-solvent type Wax 13, the polyaniline effect for anti-corrosion performance was significantly improved. (above 2.00 times).

Table 4:

| Base Matrix (wax) | PAni conc. Wt% based on total weight | **Applied WAX** | Substrate | μm of matrix thickness | Red rust inspected in CCT | PAni effect, vs. w/o PAni | |
|---|---|---|---|---|---|---|---|
| | | | | | Cycles | Ratio | vs. |
| WAX 1 | 3,8% | **WAX_4** | SPC | 25 | 400 | **1,60** | Comparison 1 |
| WAX 2 | 3,0% | **WAX_5** | SPC | 25 | 120 | **1,71** | Comparison 2 |
| WAX 2 | 0,5% | **WAX_10** | SPC | 25 | 130 | **1,86** | Comparison 2 |
| WAX 2 | 0,5% | **WAX_13** | SPC | 25 | 240 | **3,43** | Comparison 2 |
| WAX 3 | 0,5% | **WAX_8** | SPC | 25 | 200 | **1,18** | Comparison 3 |
| WAX 2 | 3,0% | **WAX_5** | GA45 | 25 | 200 | **1,25** | Comparison 4 |

(continued)

| Base Matrix (wax) | PAni conc. Wt% based on total weight | Applied WAX | Substrate | μm of matrix thickness | Red rust inspected in CCT | PAni effect, vs. w/o PAni | |
|---|---|---|---|---|---|---|---|
| | | | | | Cycles | Ratio | vs. |
| WAX 2 | 0,5% | **WAX_10** | GA45 | 25 | 256 | **1,60** | Comparison 4 |
| WAX 2 | 0,5% | **WAX_13** | GA45 | 25 | 360 | **2,25** | Comparison 4 |
| WAX 2 | 0,5% | **WAX_10** | SPC | 50 | 330 | **1,32** | Comparison 5 |
| WAX 2 | 3,0% | **WAX_5** | GA45 | 50 | 330 | **1,50** | Comparison 6 |
| WAX 2 | 0,5% | **WAX_10** | GA45 | 50 | 380 | **1,73** | Comparison 6 |
| | | | | | | | |
| WAX 1 | 0% | **WAX_1** | SPC | 25 | 250 | 1,00 | [Comparison 1] |
| WAX 2 | 0% | **WAX_2** | SPC | 25 | 70 | 1,00 | [Comparison 2] |
| WAX 3 | 0% | **WAX_3** | SPC | 25 | 170 | 1,00 | [Comparison 3] |
| WAX 2 | 0% | **WAX_2** | GA45 | 25 | 160 | 1,00 | [Comparison 4] |
| WAX 2 | 0% | **WAX_2** | SPC | 50 | 250 | 1,00 | [Comparison 5] |
| WAX 2 | 0% | **WAX_2** | GA45 | 50 | 220 | 1,00 | [Comparison 6] |

**Example 8**

To further confirm the polyaniline's contribution to anti-corrosion performance, a test called **Roof Exposure Test** was conducted. The results are shown in Figure 23. The details of this test procedure are as follows.

Preparation of substrate:

The test panels are prepared in the same way as the ones of Example 7. Each wax coating was applied in a thickness of 25 microns.

Conditions of roof exposure:

The roof exposure was conducted on the roof of Nissan Technical Centre, 560-2 Okatsukoku Atsugi-city Kanagawa JAPAN. The specimens were fixed on exposure stands as schematically shown in Figure 24.

Results:

The improvement resulting from of the use of a polyaniline component in the anti-corrosion waxes is illustrated by the results shown in Figure 23. Polyaniline dispersed in both solvent-based wax and solvent-free waxes showed a significantly better anti-corrosion performance than the waxes without polyaniline.

**Example 9**

To further confirm the polyaniline's contribution to anti-corrosion performance in a cavity wax at the hem of a metal part, a test called **Cyclic Corrosion Test-P (CCT-P) for Hem Panels** was conducted. The results of this test are shown in Figures 25 and 26. The details of this test procedure are as follows.

Preparation of test specimen:

The hem test panels have a design as schematically shown in Figure 27. The specific shape of the specimens is intented to reproduce the corrosion situation in the door hem of an automobile more closely than the flat panels discussed above. Two kinds of steel, namely non-coated steel (mild steel) and zinc-galvanised steel, are used to form the hem. For all outer panels, zinc-galvananized steel is used while mild steel or zinc-galvanized steel is used for inner panels.

Conditions of the Cyclic Corrosion Test-P Method (CCT-P):

To simulate the corrosive environment and to accelerate the corrosion process, the following CCT-P conditions were adopted:

(iv) Four hours of salt spray at 35 °C
(v) Two hours of drying at 60 °C and a relative humidity below 30%RH
(vi) Two hours of humidity at 50 °C and a relative humidity of 95%RH.

Thus, the total duration of one cycle is eight hours. A solution of 0.5% sodium chloride was used as the salt spray.

Corrosion evaluation method:

After 450 cycles of CCT-P testing, the hem panels were opened and the corrosion in the hem was determined. The results are shown in Figures 25 and 26, comparing hem panels with and without wax coating. By comparing Figure 25(a) and Figure 26(b), it can be seen that if wax is applied to the hem (made of zinc-galvanized steel for outer panels and mild steel for inner panels) as shown in Figure 25(a), the anti-corrosion performance is superior to that of the hem made of zinc-galvanized steel for both outer and inner as shown in Figure 26(b).

Results:

The improvement obtained by using polyaniline in an anti-corrosion wax was also confirmed by the hem panel test, which test used hem panels based on zinc-galvanized and mild steel. Especially, the wax composition according to the present invention allows one to eliminate the use of zinc-galvanized steel while maintaining or even improving anti-corrosion performance. Moreover, this has the further consequence that the carbon dioxide emission during the hot-melt galvanizing process in steel industries can be reduced significantly. Furthermore, if this combination is applied to mobile vehicles, since the fuel consumption is much decreased because of lightening the body, the present invention also contributes significantly to reduce the carbon dioxide emission of the vehicles.

## Example 10

To further confirm the polyaniline component's contribution to anti-corrosion performance of a cavity wax when used in a composite panel, a test called the **Cyclic Corrosion Test-Q (CCT-Q) for Composite Joint Panels** was conducted. The details of this test procedure are as follows.

Preparation of substrate:

The design of the composite joint panels is schematically shown in Figure 28. The specific shape of the specimens is intended reproduce the corrosion situation in the panel joint of an automobile more closely than the flat panels discussed above. Two kinds of steel were used, namely non-coated steel and zinc-galvanised steel.

Conditions of the Cyclic Corrosion Test-Q method (CCT-Q):

To simulate the corrosive environment and to accelerate the corrosion process, the following CCT-Q conditions were adopted:

(i) 60 minutes of salt spray at 35 °C;
(ii) 115 minutes of drying at60 °C and arelative humidity below 30%RH;
(iii) (115 minutes of humidity in 60 degrees C and relative humidity 80%RH;.
(iv) repeating (ii) and (iii) six times before returning to (i) again.

Thus, the duration of one total cycle was 24 hours.

Corrosion evaluation method:

After 450 cycle of CCT-Q, the composite joint panels were opened and the corrosion in the inner areas was determined. The results are shown in Figures 29a and 29b, comparing the waxes containing polyaniline with those without polyaniline. It can be seen that if the wax composition of the present invention is applied to the panel at the joint or crevice, both zinc-galvanized steel and mild steel coated with the composition of the present invention exhibited a significantly better anti-corrosion performance than waxes without polyaniline.

Results:

Similar to Example 9, the improvement obtained by using polyaniline in an anti-corrosion wax was also confirmed by the composite joint panel test as explained in detail above, which test used composite joint panels based on zinc-galvanized and mild steel. Especially, the wax composition according to the present invention allows one to eliminate the use of zinc-galvanized steel while maintaining or even improving anti-corrosion performance. Moreover, this has the further consequence that the carbon dioxide emission during the hot-melt galvanizing process in steel industries can be reduced significantly. Furthermore, if this combination applied to mobile vehicles, since the fuel consumption is much decreased because of lightening the body, the present invention also contributes significantly to reduce the carbon dioxide emission of the vehicles.

## Claims

1. A corrosion-protective composition containing a wax, an unsubstituted or substituted polyaniline in a doped form and a liquid paraffin.

2. The composition of claim 1, wherein the polyaniline component is present in the composition in the form of dispersed particles having a mean size (number mean diameter) in the range from 100 to 600 nanometers.

3. The composition of claim 1, wherein degree of dispersion of the polyaniline component in the composition is **characterized by** an A/B ratio in the range from 2 to 3, as derived from a UV-Vis-spectrum, measured at room temperature, wherein
parameter A is the absorbance of a sample of the composition, measured in xylene at 450 nm wavelength; and
parameter B is the absorbance of a sample of the composition, measured in xylene at 880 nm wavelength.

4. The composition of any one of the preceding claims wherein the composition contains at least two different types of polyaniline, wherein at least one is in a doped form.

5. The composition of any one of the preceding claims, wherein the polyaniline is selected from the group consisting of homo- or copolymers of an unsubstituted or substituted polyaniline.

6. The composition of any one of the preceding claims, wherein the polyaniline is derived from the polymerization or copolymerization of aniline, alkyl-substituted anilines or sulfonated anilines.

7. The composition of any one of the preceding claims, wherein the polyaniline is doped by use of a dopant selected from the group consisting of aromatic sulfonic acids.

8. The composition of any one of the preceding claims, wherein the molar concentration of the dopant in the polyaniline is in the range from 20 to 200%, preferably 60 to 150%, relative to the number of moles of the aniline monomer units.

9. The composition of any one of the preceding claims, wherein the polyaniline is present in a concentration in the range of 0.05% to 5%, preferably 0.2% to 2%, more preferably 0.5 % to 2%, relative to the total weight of the composition.

10. The composition of any one of the preceding claims, wherein the concentration of the liquid paraffin is in the range from 5 to 95, preferably 10 to 90 or 20 to 80, or more preferably 30 to 70 or even more preferably 40 to 60%, relative to the total weight of the composition.

**11.** The composition according to any one of the preceding claims, wherein the liquid paraffin comprises alkane hydrocarbons having the general formula $C_nH_{2n+2}$, wherein $n \leq 20$.

**12.** The composition according to any one of the preceding claims, wherein the wax component is nitrogen-free and contains a material **characterized by** the presence of carbon-carbon double bonds which can be cured by exposure to oxygen.

**13.** The composition to any one of the preceding claims, wherein the viscosity of the wax component is in the range of 100 to 1,000 mPas, determined at 20 °C according to DIN 53019-2.

**14.** The composition according to any one of the preceding claims, wherein the wax component shows a thixotropic behaviour.

**15.** The composition according to any one of the preceding claims, wherein the composition contains a material which is **characterized by** the presence of carbon-carbon double bonds in a concentration in the range from 70 to 200 based on iodine value.

**16.** The composition according to any one of the preceding claims, wherein the composition contains a material which is **characterized by** the presence of carbon-carbon double bonds and is selected from the group consisting of oils of vegetable origin.

**17.** An article comprising a substrate to be protected against corrosion and a single layer coating comprising the composition as defined in any one of the preceding claims.

**18.** A process for manufacturing a composition as defined in anyone of the preceding claims 1 to 17, wherein

i) a first dispersion of a polyaniline in a doped form is prepared;
ii) the first dispersion of the polyaniline is combined with a wax component to sufficiently disperse the polyaniline therein.

**19.** The process according to claim 18, wherein the first dispersion of the polyaniline is formed in a liquid paraffine as the dispersion medium.

**20.** A process for manufacturing an article as defined in claim 18, wherein the composition is prepared as defined in anyone of claim 18 or 19.

**21.** The article of claim 17, wherein the substrate selected from the group consisting of steel, iron, zinc, aluminum or magnesium-plated steel aluminum and magnesium.

**22.** The use of a composition as defined in any one of claims 1 to 16 as a single layer coating for the protection against corrosion of a substrate in need thereof.

**23.** The use of claim 22, wherein the substrate is selected from the group consisting of iron, zinc, aluminum, steel, and aluminum or magnesium-plated steel.

**24.** The use of anyone of claims 22 or 23, wherein the substrate has a shape such that the coating is formed within a cavity or a hollow space.

## Figure 1

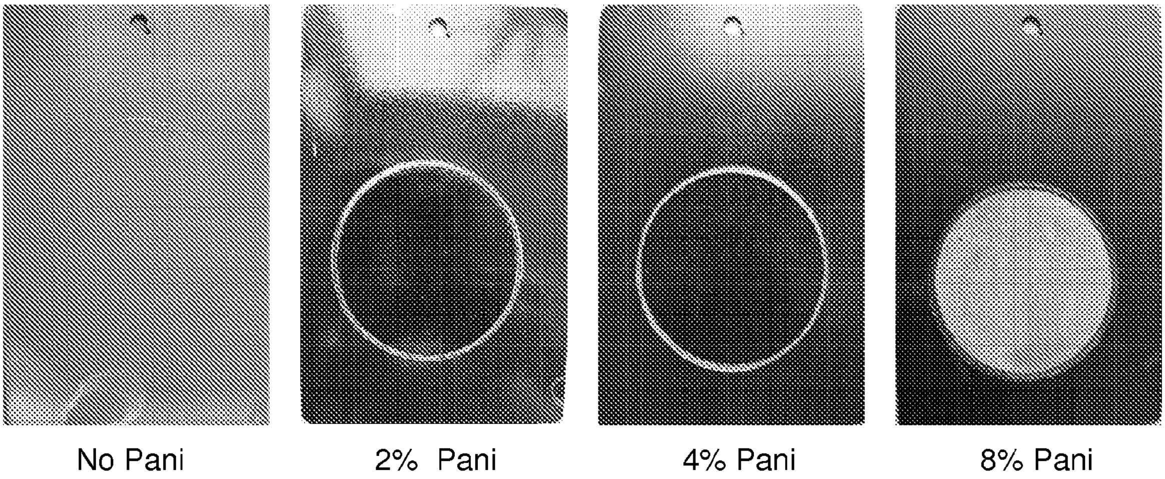


## Figure 2

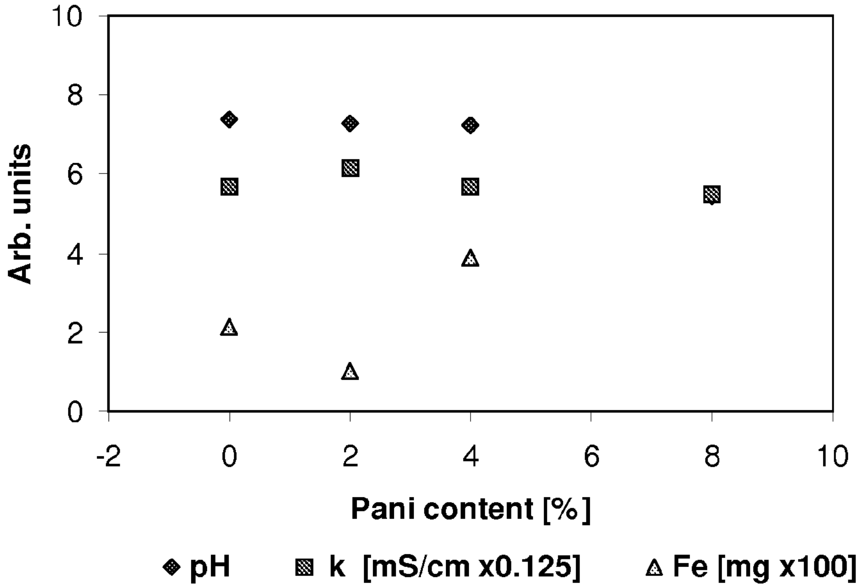

**Figure 3**

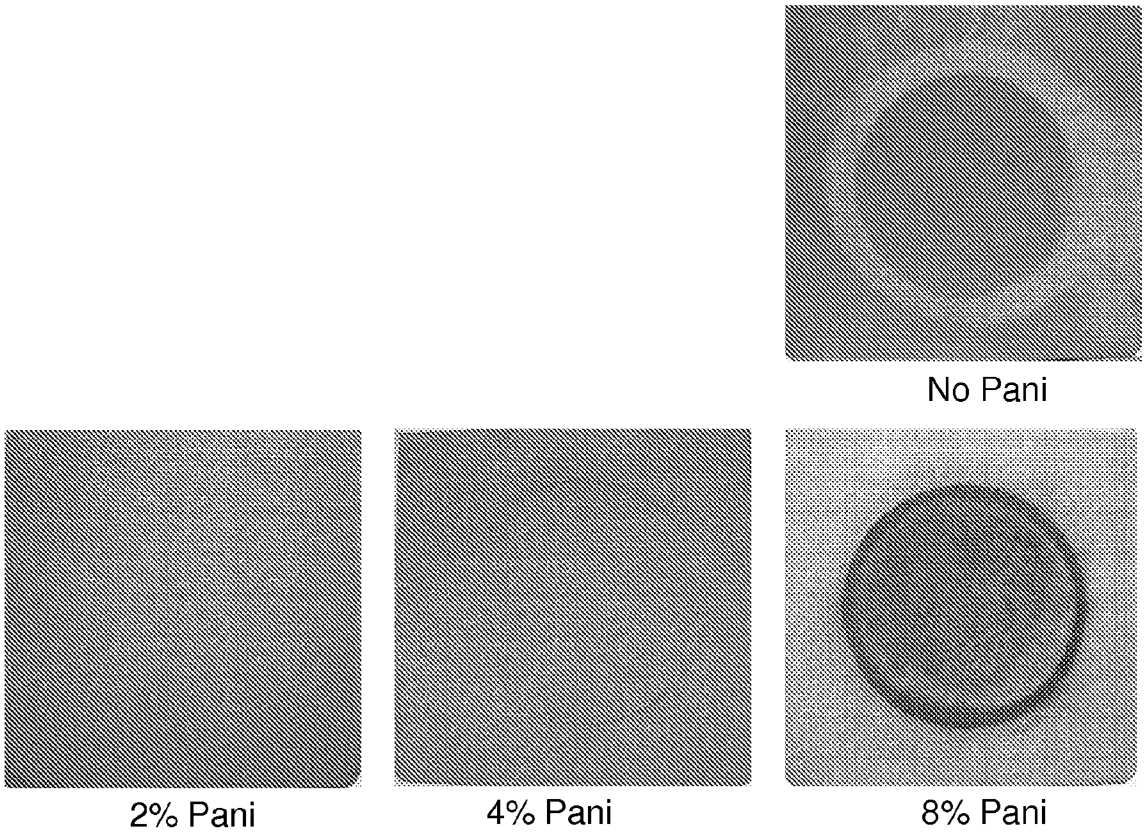

# Figure 4

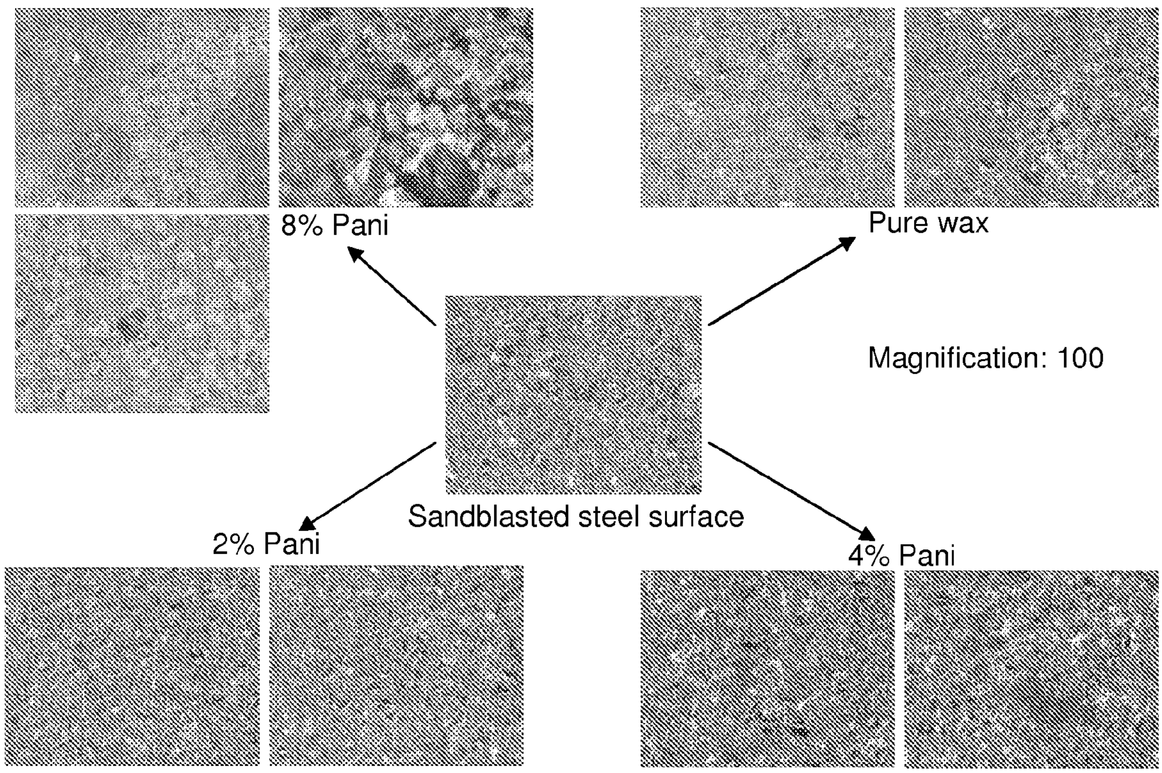
8% Pani
Pure wax
Magnification: 100
Sandblasted steel surface
2% Pani
4% Pani

## Figure 5

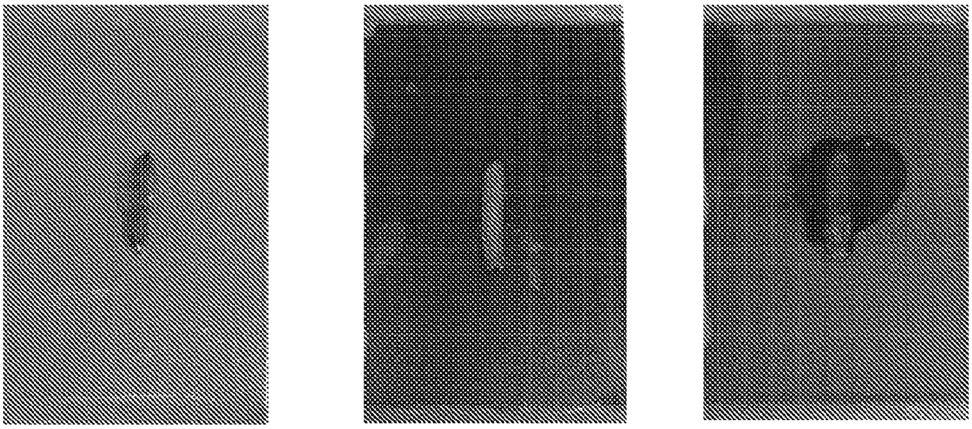

No Pani 4% Pani 10% Pani

## Figure 6

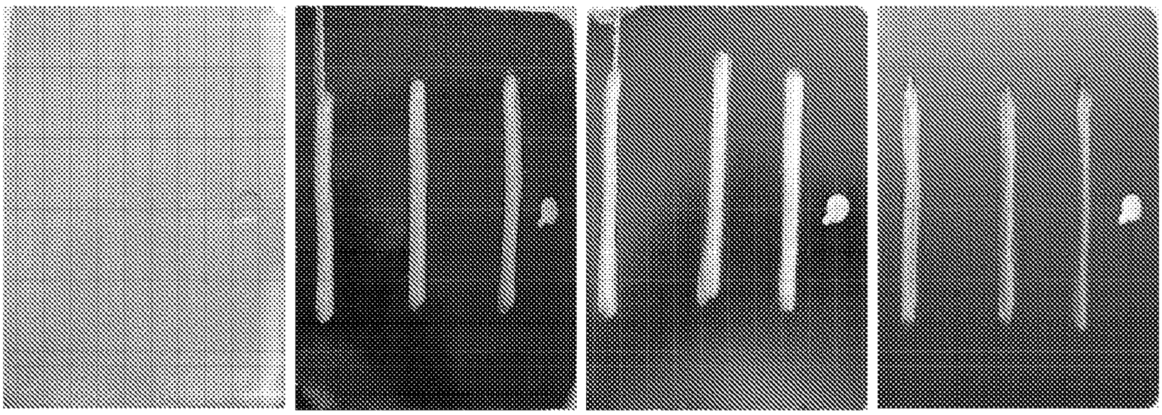

No Pani 2% Pani 4% Pani 8% Pani

## Figure 7

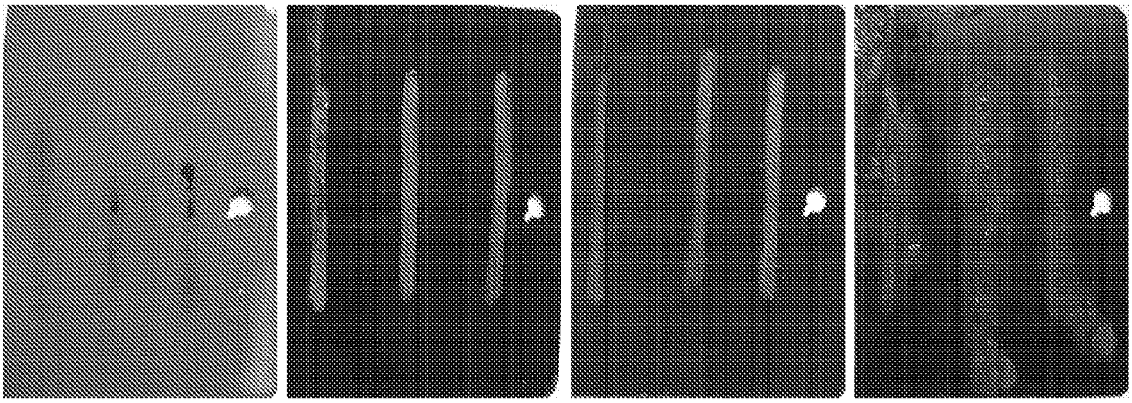

No Pani 2% Pani 4% Pani 8% Pani

## Figure 8

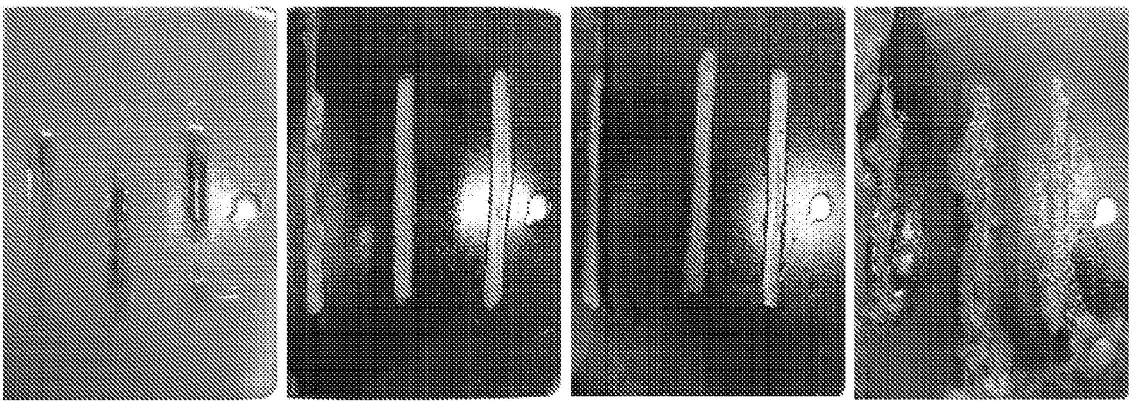

No Pani 2% Pani 4% Pani 8% Pani

Figure 9

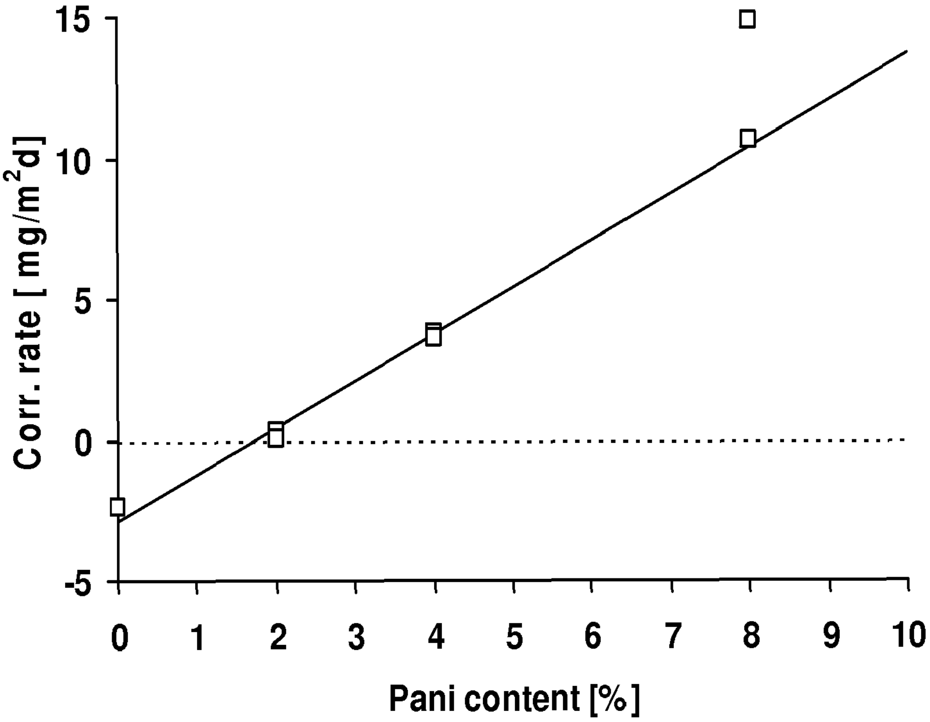

Figure 9a

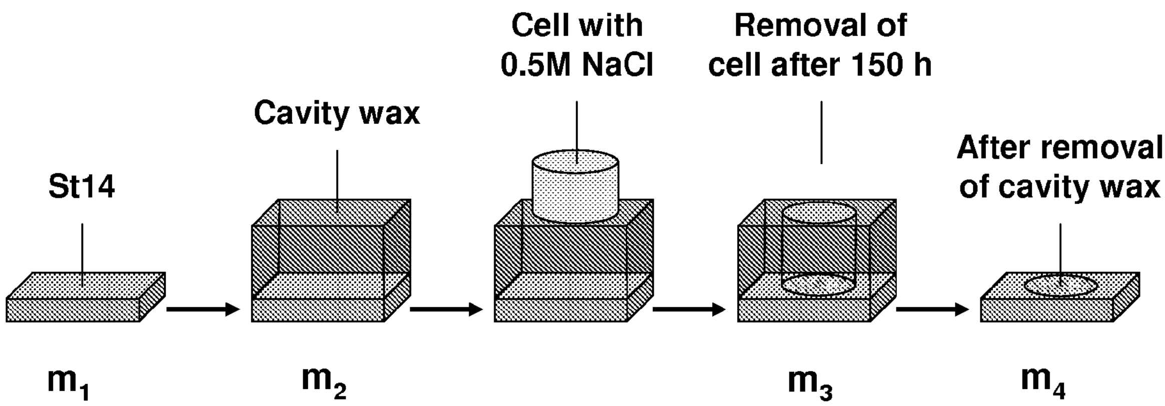


$$d_{wax} = m_2 - m_1 / A \times \rho$$

$$v_r = m_4 - m_1 / A \times t$$

# Figure 10

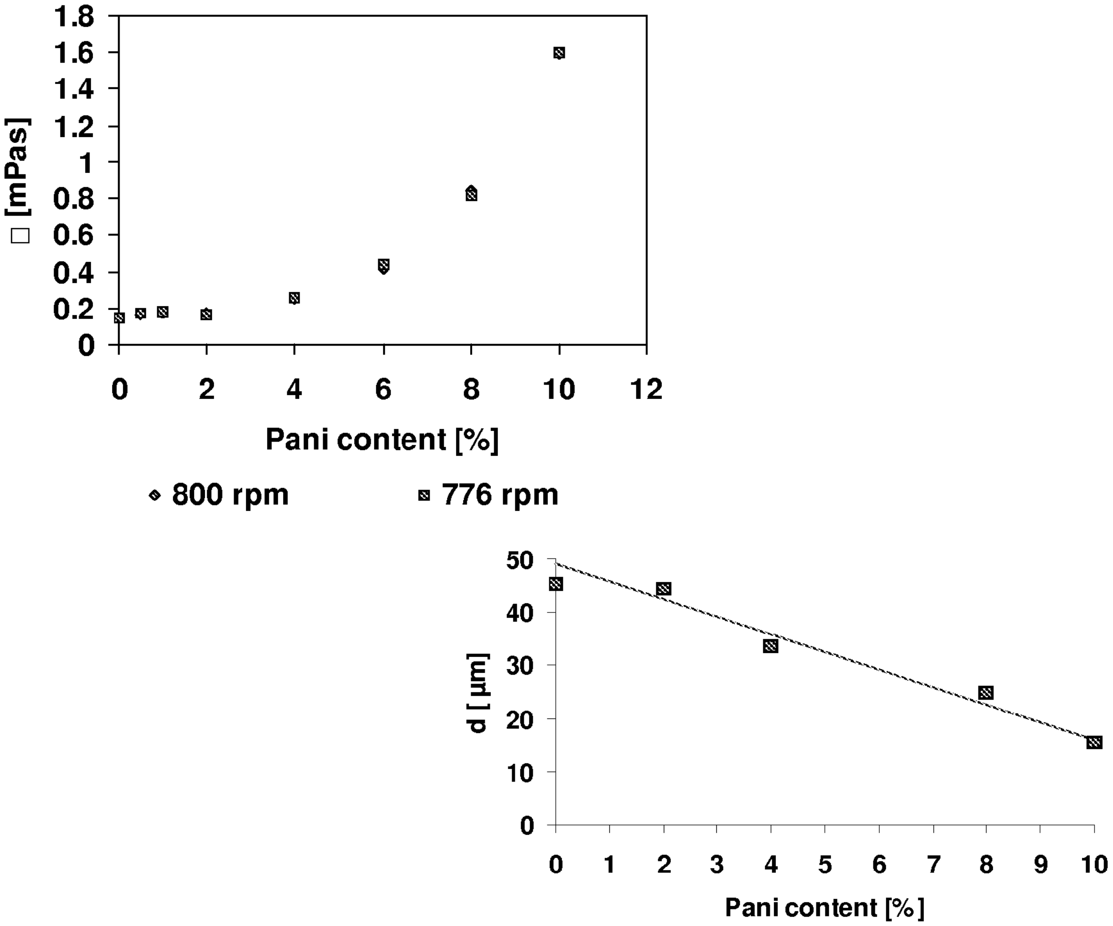
□ [mPas]
1.8
1.6
1.4
1.2
1
0.8
0.6
0.4
0.2
0
0
2
4
6
8
10
12
Pani content [%]
800 rpm
776 rpm
d [ µm]
50
40
30
20
10
0
0
1
2
3
4
5
6
7
8
9
10
Pani content [%]

## Figure 11

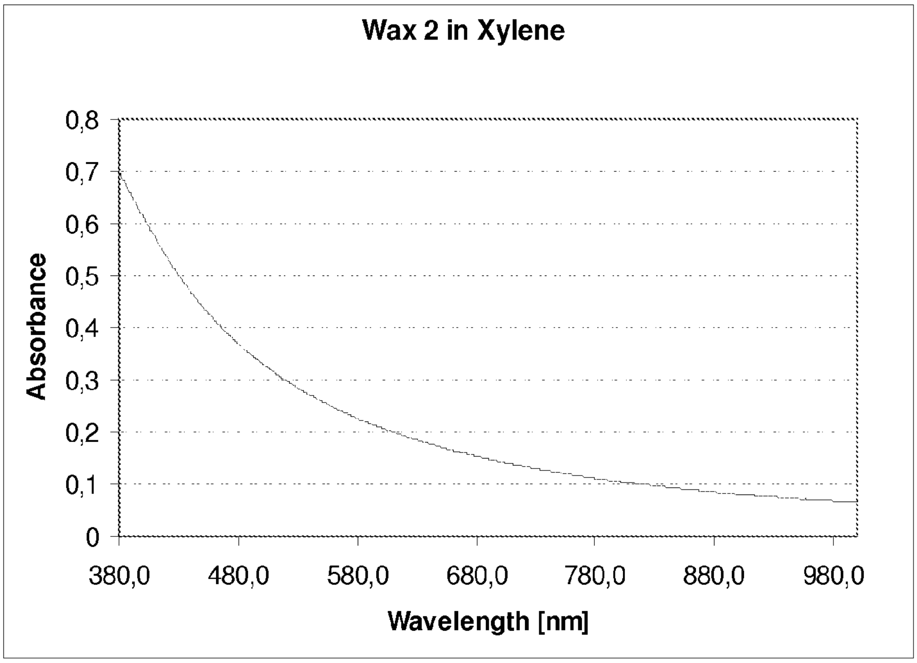


## Figure 12

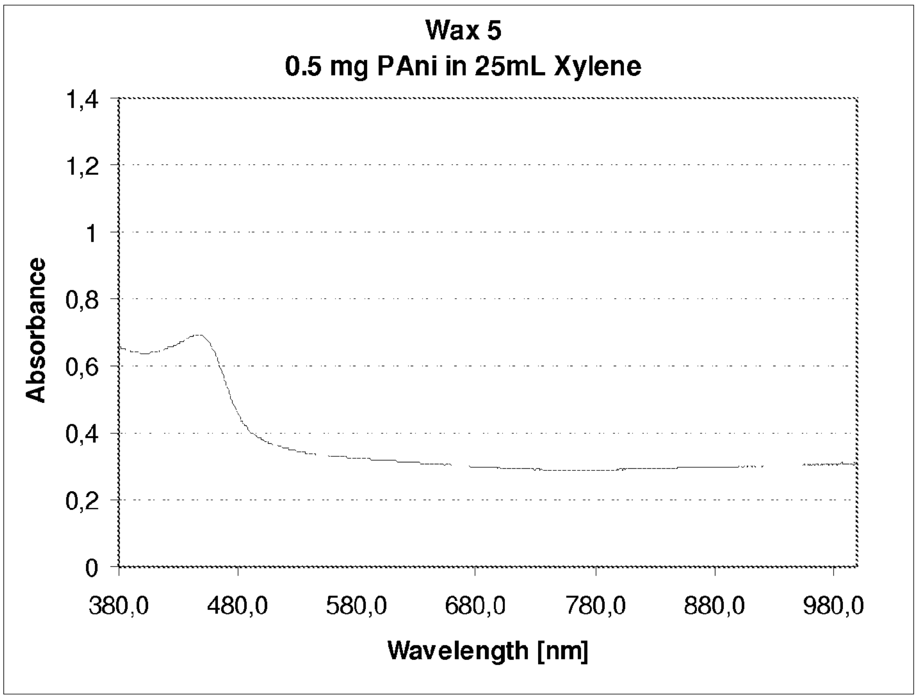

## Figure 13

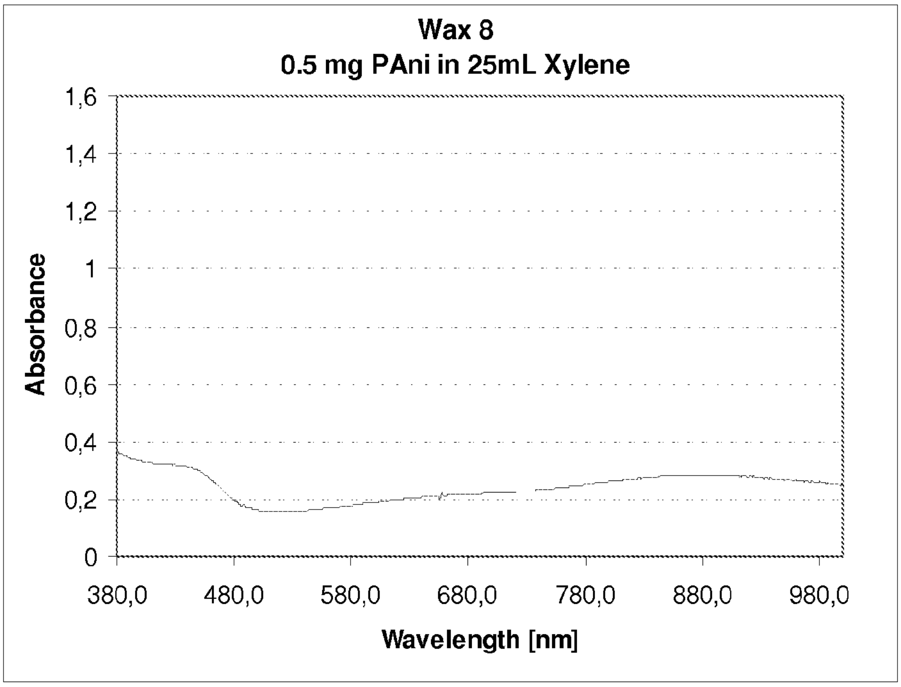


## Figure 14

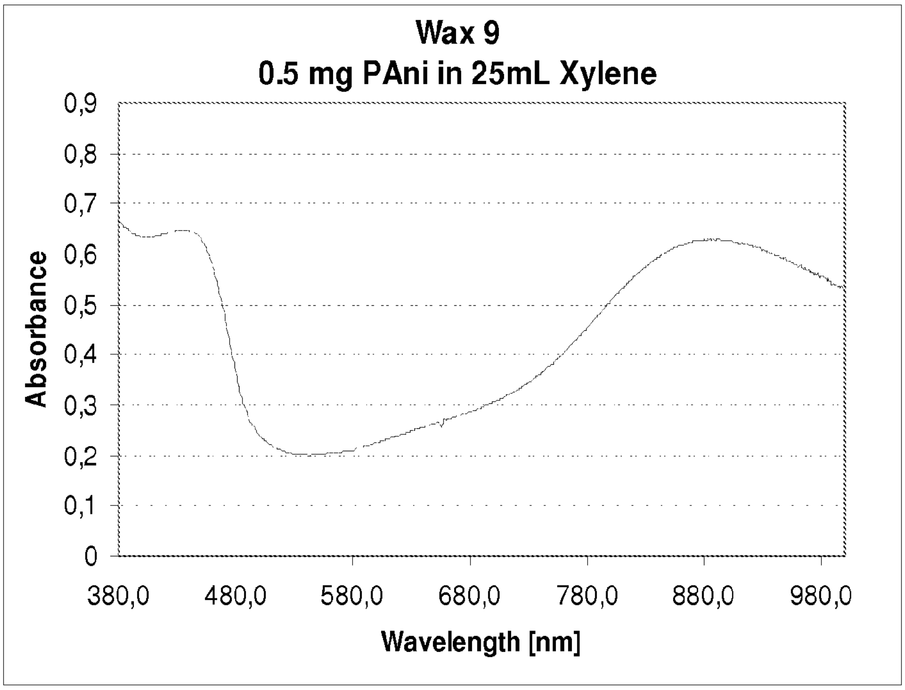

# Figure 15

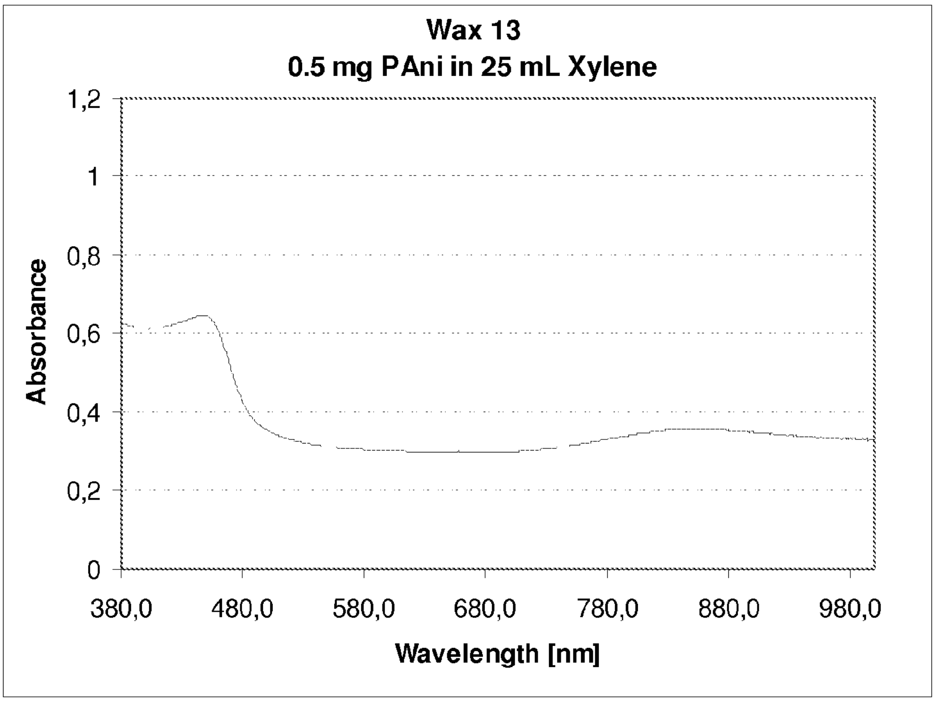


# Figure 16

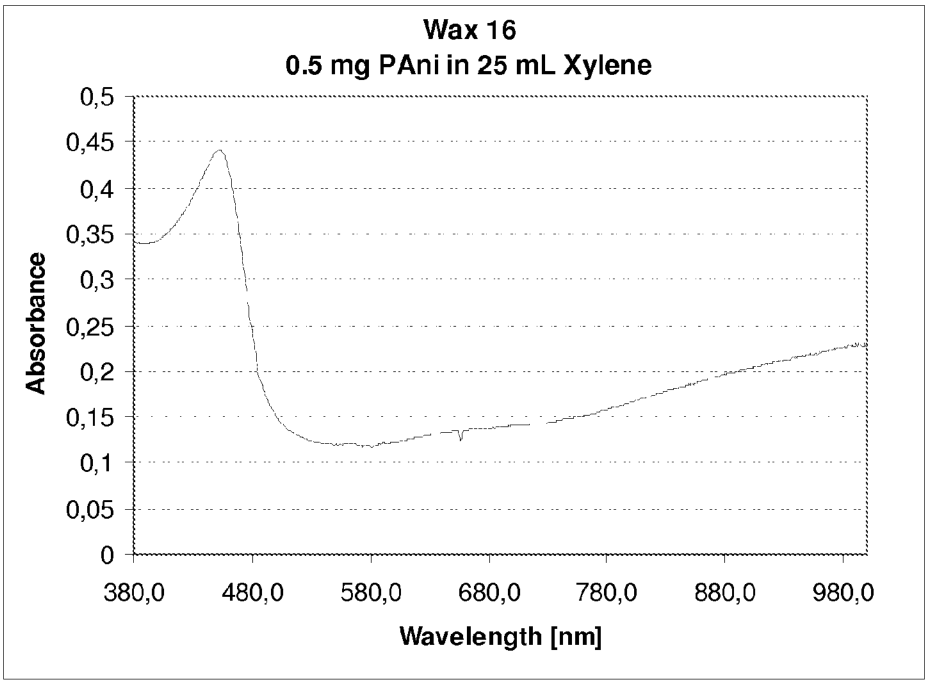

# Figure 17

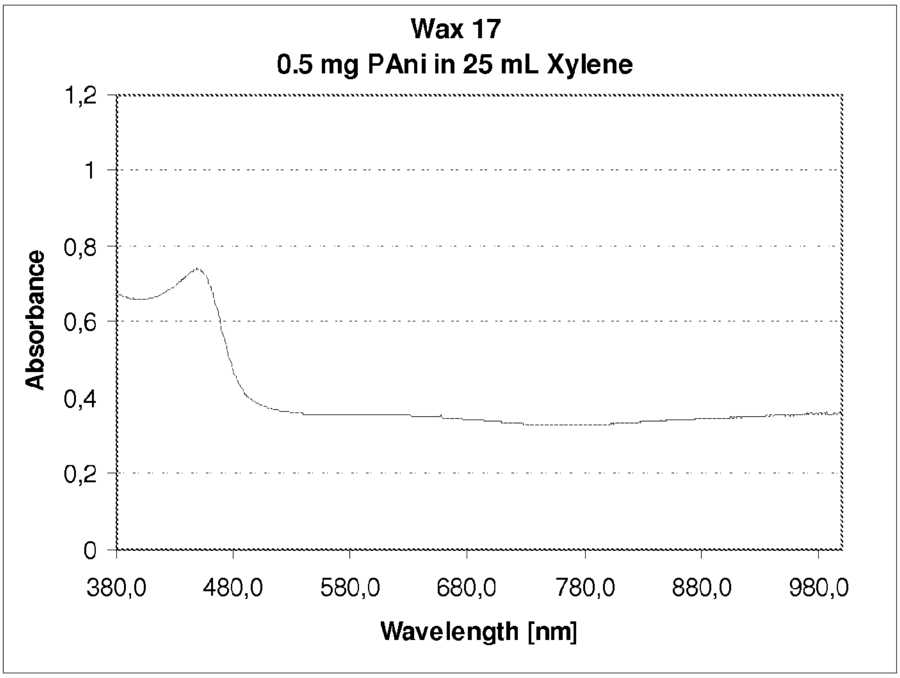


# Figure 18

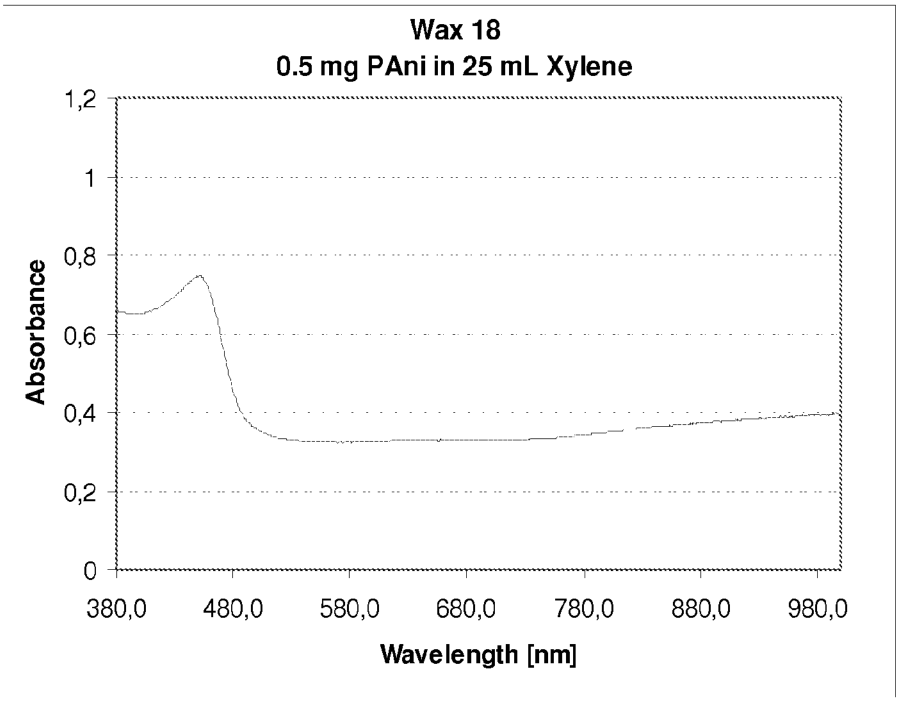

## Figure 19

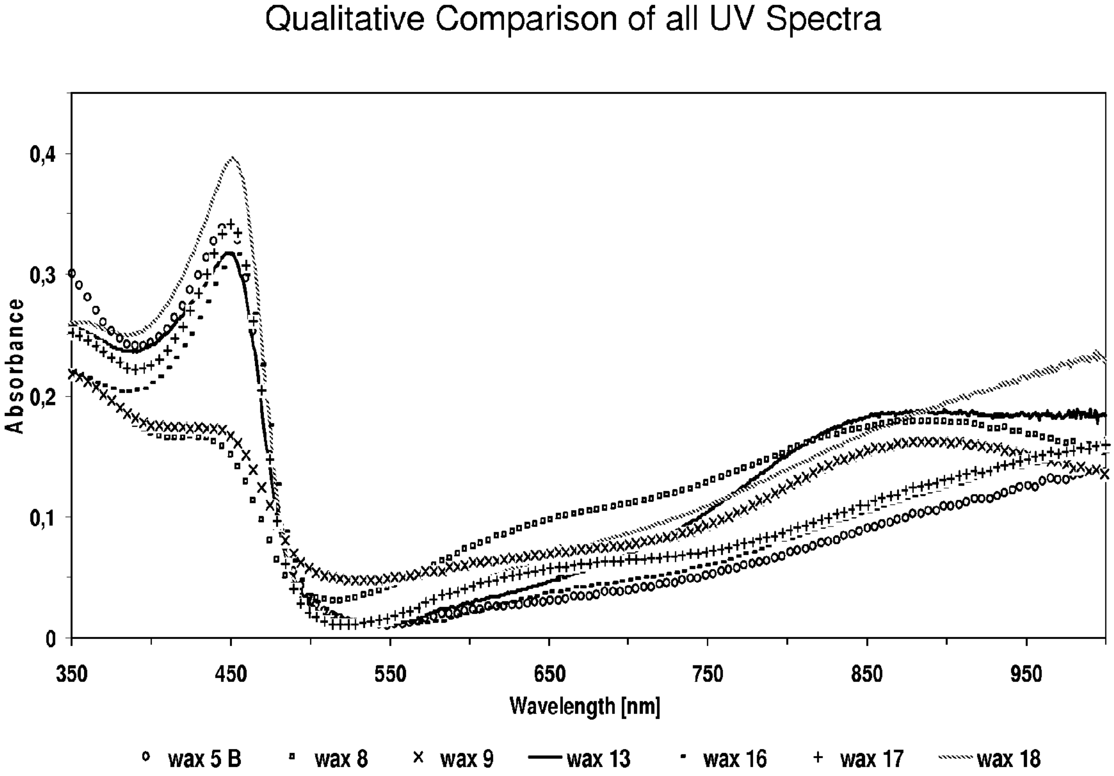


## Figure 20

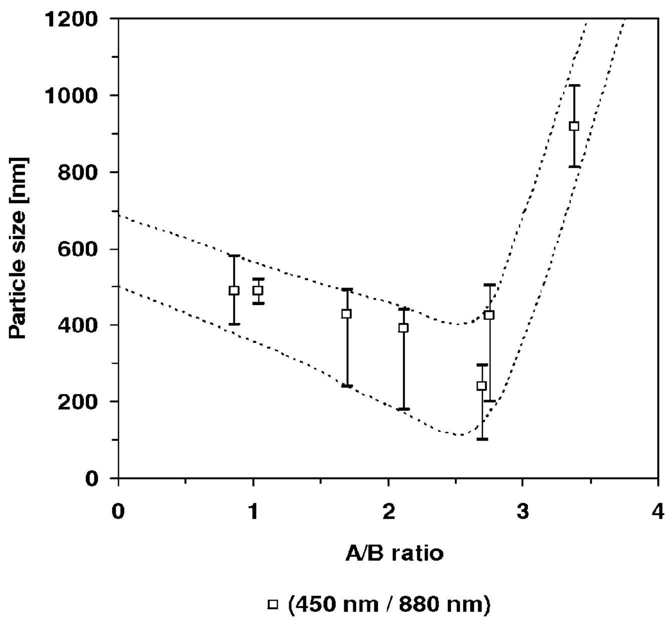

## Figure 21

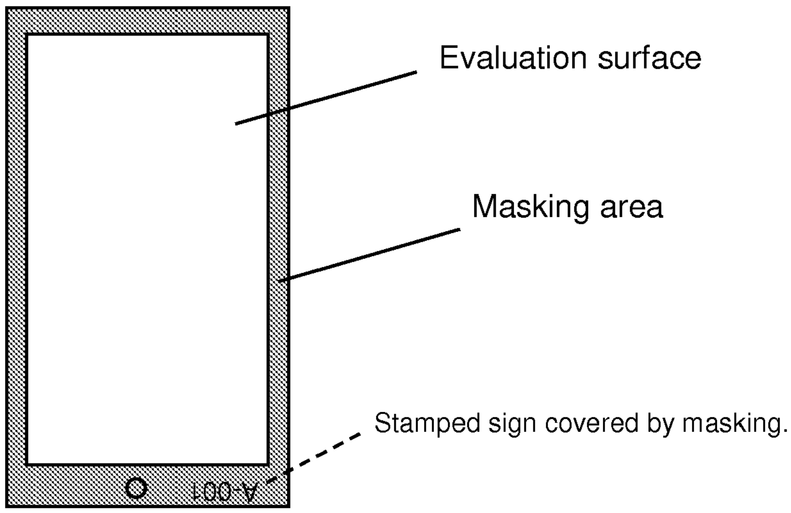


## Figure 22

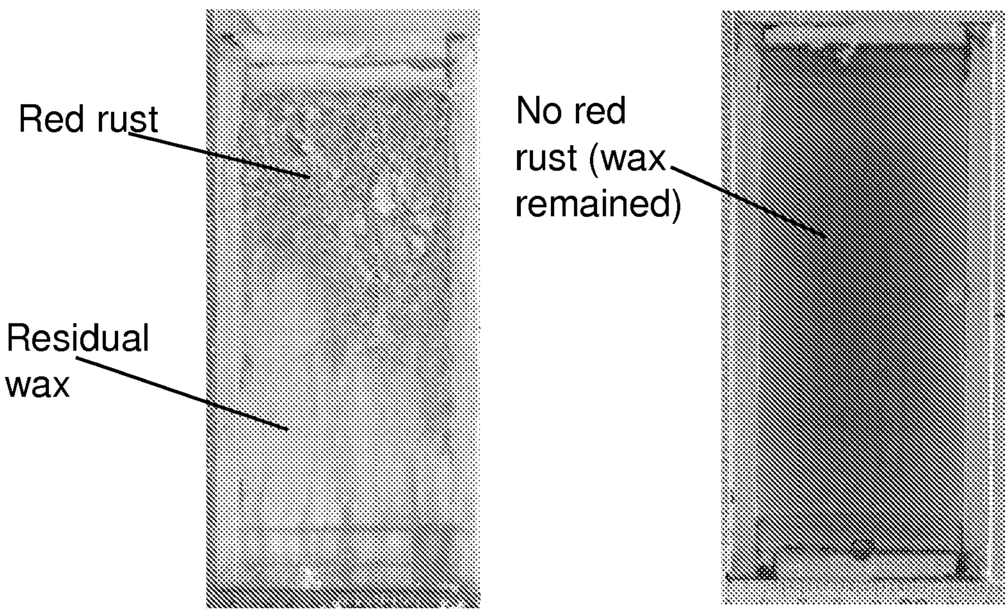


(a) w/o polyaniline (b) with polyaniline

Wax 2 Wax 13

Pictures of test panels after 100 cycles of CCT-P

## Figure 23

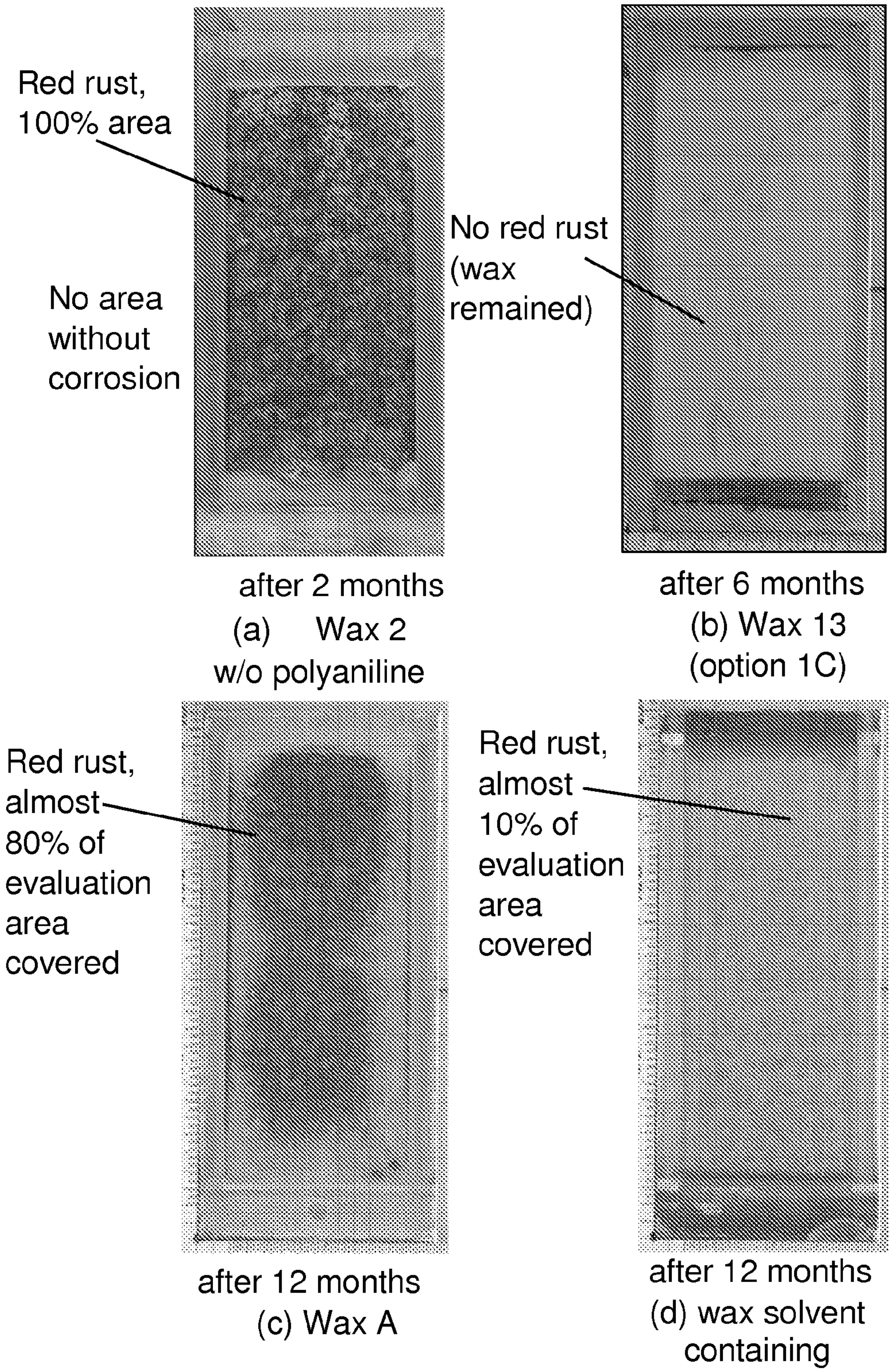


Pictures of test panels after roof exposure

# Figure 24

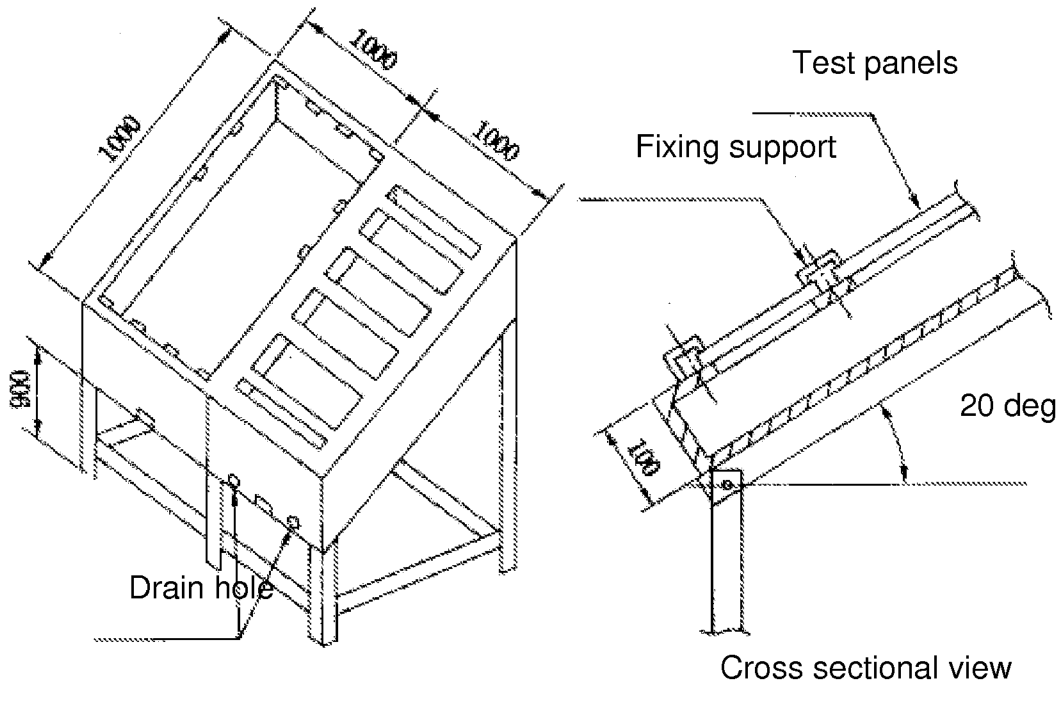
1000
1000
1000
900
Drain hole
Test panels
Fixing support
100
20 deg
Cross sectional view

## Figure 25

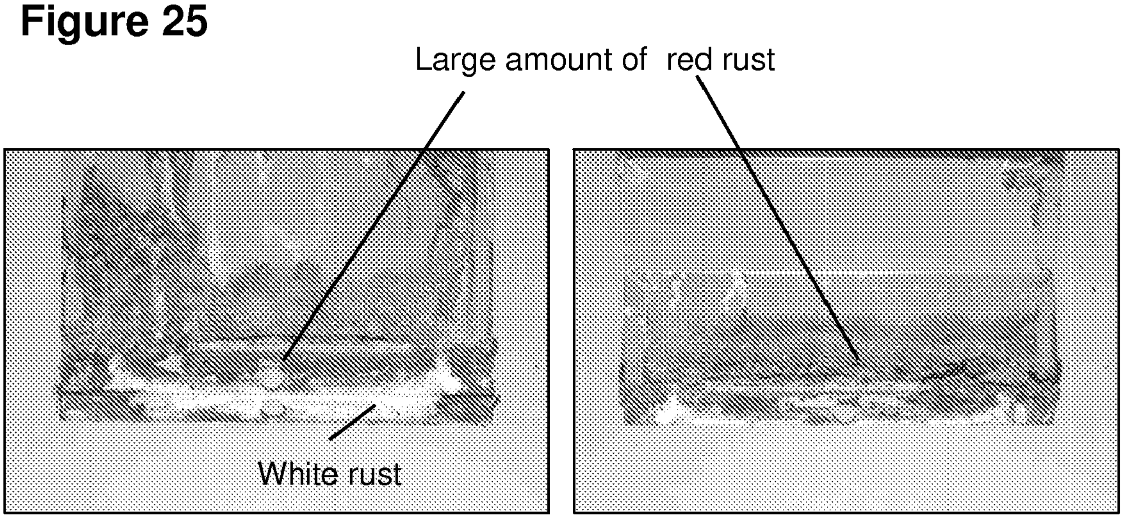


Outer panel (Zn-galvanized steel) Inner panel (Zn-galvanized steel)

(a) Hem panel, without wax

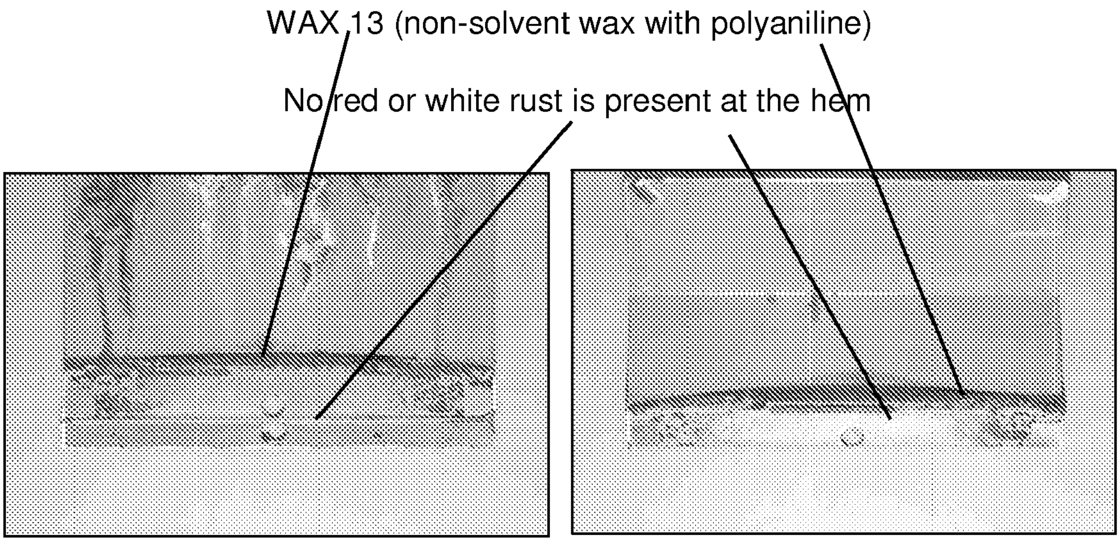


Outer panel (Zn-galvanized steel) Inner panel (Zn-galvanized steel)

(b) Hem panel, with wax

Hem panels as opened after CCT-P 450 cycles

## Figure 26

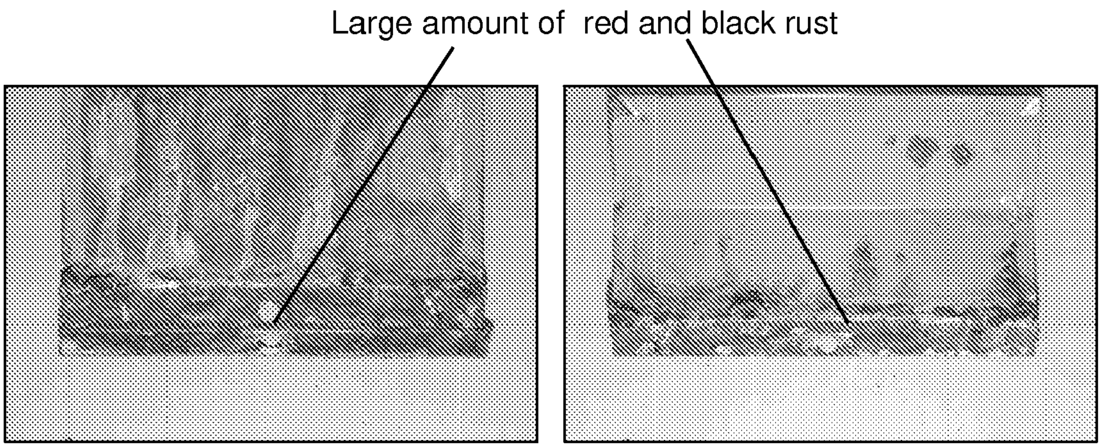


Outer panel (Zn-galvanized steel) Inner panel (Mild steel)

(a) Hem panel, without wax

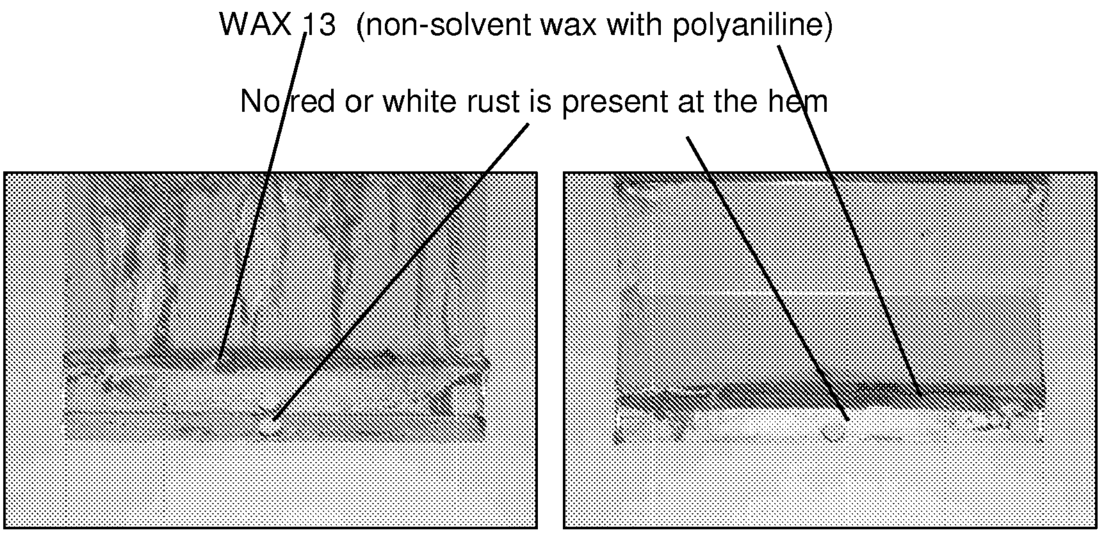


Outer panel (Zn-galvanized steel) Inner panel (Mild steel)

(b) Hem panel, with wax

Hem panels as opened after CCT-P 450 cycles

## Figure 27

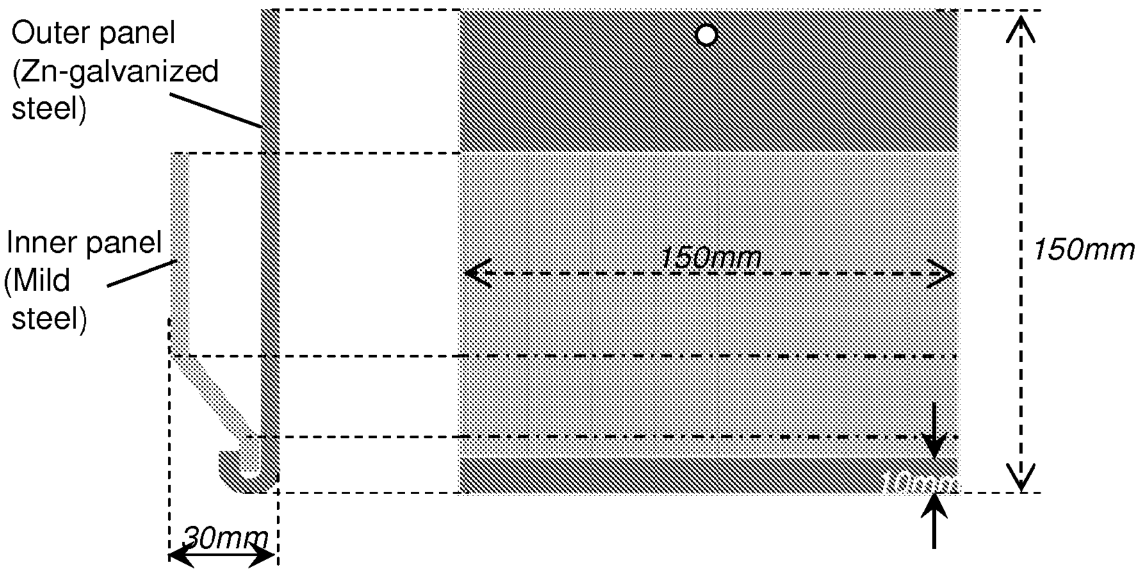


## Figure 28

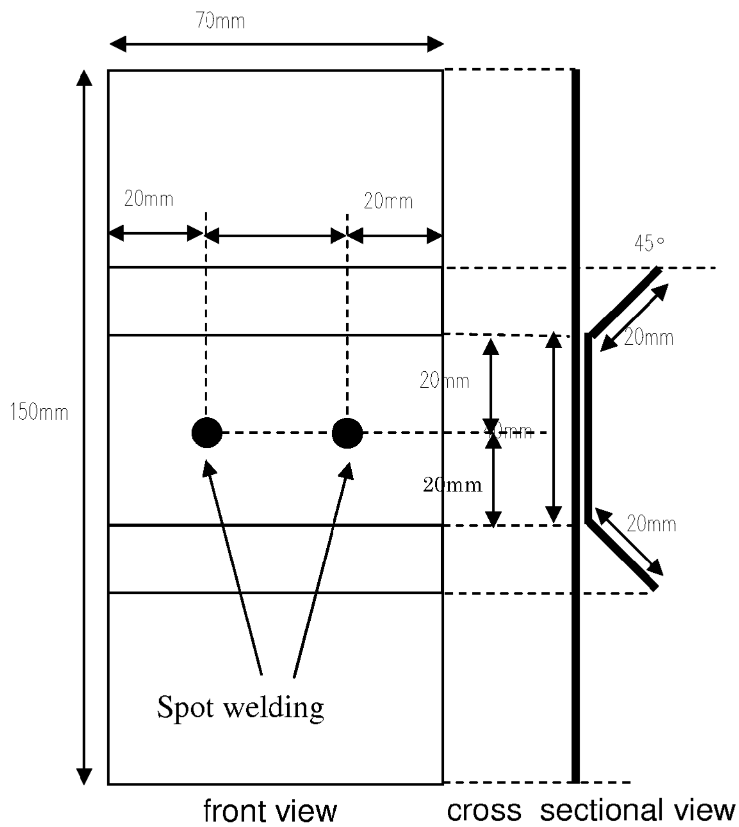

## Figure 29a

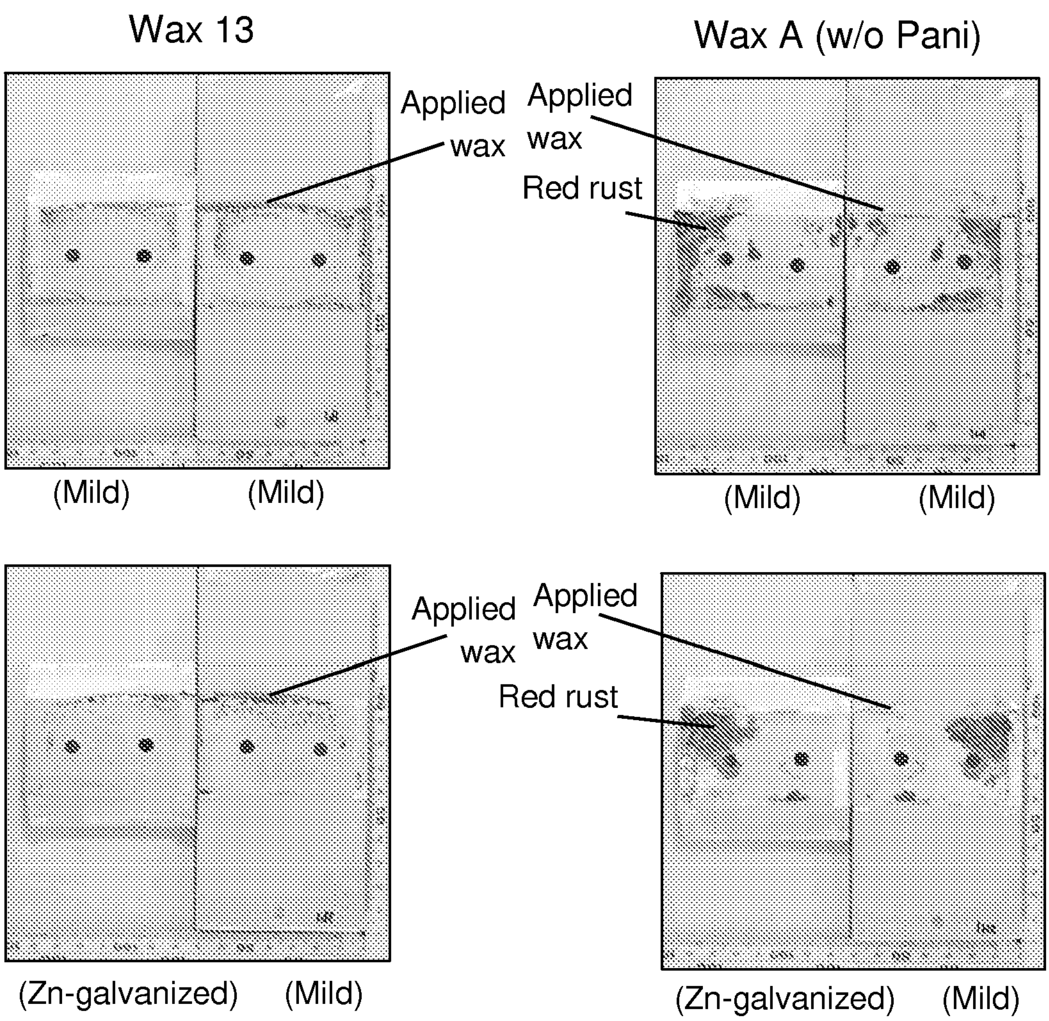
Wax 13
Wax A (w/o Pani)
Applied wax
Applied wax
Red rust
(Mild)
(Mild)
(Mild)
(Mild)
Applied wax
Applied wax
Red rust
(Zn-galvanized)
(Mild)
(Zn-galvanized)
(Mild)

# Figure 29b

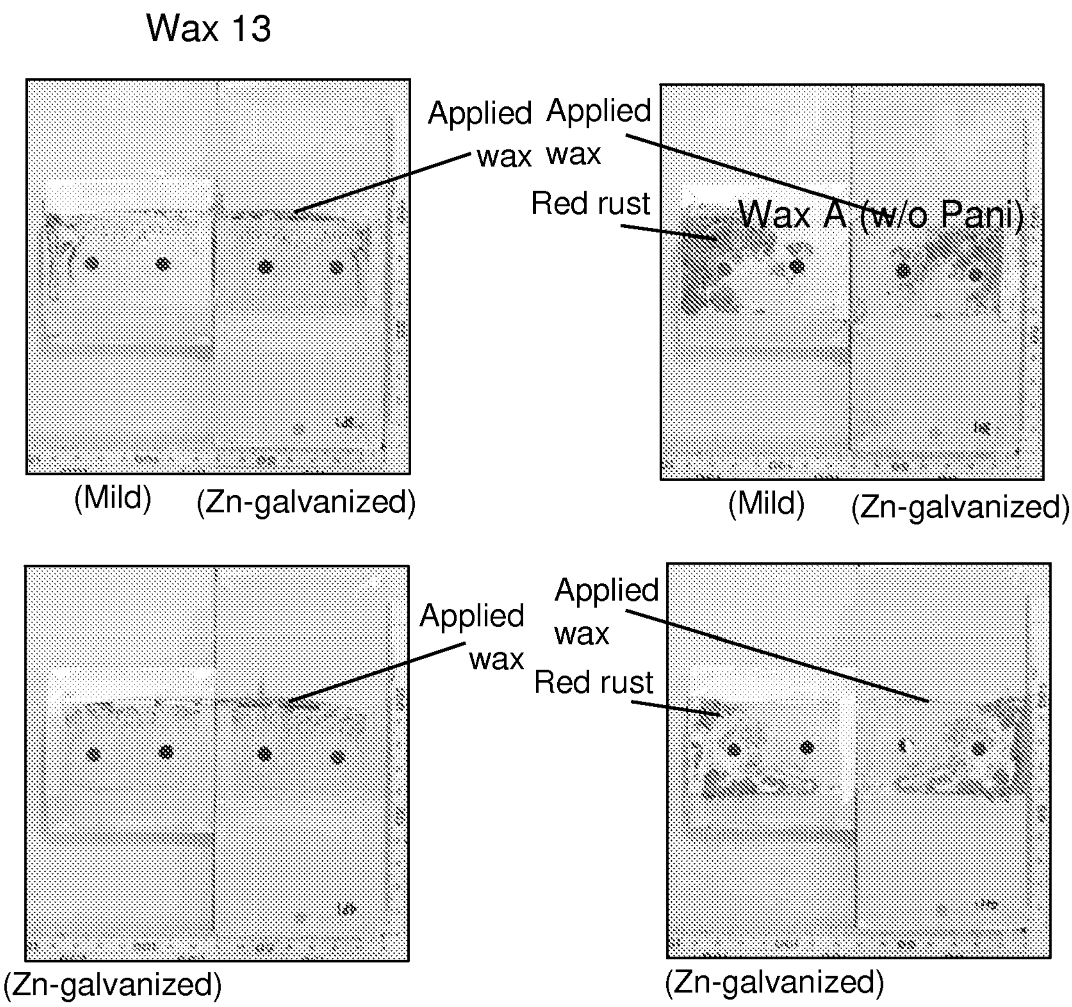
Wax 13
Applied wax
(Mild)
(Zn-galvanized)
Applied wax
Red rust
Wax A (w/o Pani)
(Mild)
(Zn-galvanized)
Applied wax
(Zn-galvanized)
Applied wax
Red rust
(Zn-galvanized)

Europäisches Patentamt
European Patent Office
Office européen des brevets

# EUROPEAN SEARCH REPORT

Application Number
EP 10 15 8716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2009/040626 A2 (TOYOTA MOTOR CO LTD [JP]; TAKADA YU [JP]; KURAMOTO NORIYUKI [JP]) 2 April 2009 (2009-04-02)<br>* the whole document *<br>----- | 1-24 | INV.<br>C09D5/08<br>C09D191/06 |
| A | US 6 312 509 B1 (MORADIAN EBRAHIM [US]) 6 November 2001 (2001-11-06)<br>* the whole document *<br>----- | 1-24 | |
| A | US 2004/035498 A1 (KINLEN PATRICK J [US]) 26 February 2004 (2004-02-26)<br>* the whole document *<br>----- | 1-24 | |
| A | US 2004/009300 A1 (SHIMAKURA TOSHIAKI [JP] ET AL) 15 January 2004 (2004-01-15)<br>* the whole document *<br>----- | 1-24 | |
| A | US 2002/081275 A1 (HAN CHIEN-CHUNG [TW]) 27 June 2002 (2002-06-27)<br>* the whole document *<br>----- | 1-24 | |

TECHNICAL FIELDS SEARCHED (IPC)

C09D

The present search report has been drawn up for all claims

1

| Place of search | Date of completion of the search | Examiner |
|---|---|---|
| Munich | 30 July 2010 | Puttins, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 8716

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2010

| Patent document cited in search report | Publication date | Patent family member(s) | Publication date |
|---|---|---|---|
| WO 2009040626 A2 | 02-04-2009 | JP 2009078362 A | 16-04-2009 |
| US 6312509 B1 | 06-11-2001 | AT 346123 T | 15-12-2006 |
| | | AU 7291401 A | 25-02-2002 |
| | | CA 2419439 A1 | 21-02-2002 |
| | | EP 1311629 A1 | 21-05-2003 |
| | | HK 1055990 A1 | 02-02-2007 |
| | | MX PA03001241 A | 30-01-2004 |
| | | WO 0214441 A1 | 21-02-2002 |
| US 2004035498 A1 | 26-02-2004 | US 2008272341 A1 | 06-11-2008 |
| US 2004009300 A1 | 15-01-2004 | NONE | |
| US 2002081275 A1 | 27-06-2002 | US 6380346 B1 | 30-04-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5721056 A
- JP 2536817 B
- US 5648416 A
- WO 9004256 A
- US 5498761 A
- JP 2519551 B
- US 4935164 A
- JP 6068029 B
- WO 8902155 A
- US 5567355 A
- JP 8019336 B
- WO 8901694 A
- US 5069820 A
- JP 2644083 B
- WO 9010297 A
- US 5160457 A
- JP 2670329 B
- JP 2008121052 A
- WO 2009040626 A
- EP 0700573 A
- JP 3583427 B
- WO 2005070972 A
- US 20070267747 A
- JP 2007518859 A
- US 20070267747 A1
- WO 2006092292 A
- US 2008265215 A1
- JP 2008531797 A


### Non-patent literature cited in the description


- **A.G. GREEN ; A.E. WOODHEAD.** Aniline-black and allied compounds, Part I. *J. Chem. Soc.,* 1912, vol. 101, 1117
- **KOBAYASHI et al.** Electrochemical reactions ... of polyaniline film-coated electrodes. *J. Electroanal. Chem.,* 1984, vol. 177, 281-291
- Synthesis, Electrical, and Optical Properties of Conjugated Polymers. **KIEBOOMS et al.** Handbook of Advanced Electronic and Photonic Materials and Devices, Vol. 8, Conducting Polymers. Academic Press, 2001, vol. 8, 32-33
- **WESSLING et al.** *Eur. Phys. J. E,* 2000, vol. 2, 207-210